# EUROPEAN PATENT APPLICATION

(11) **EP 4 443 940 A1**
(43) Date of publication of application: **09.10.2024**
(21) Application number: 22918347.0
(22) Date of filing: 09.12.2022
(51) Int. Cl.: H04W 24/02

(54) **COMMUNICATION METHOD, APPARATUS AND SYSTEM**

(30) Priority: 06.01.2022 CN 202210012259
(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); WANG, Jun, Shenzhen, Guangdong 518129 (CN); WU, Jianjun, Shenzhen, Guangdong 518129 (CN)
(74) Representative: Goddar, Heinz J.
(86) International application number: PCT/CN2022/137878
(87) International publication number: WO 2023/130897

(57) **Abstract**

Embodiments of this application disclose a communication method, apparatus, and system. A terminal device determines a first data packet based on a first computing power instance, and sends, to a network device, the first data packet that includes information about the first computing power instance, so that the network device processes the first data packet based on a second computing power instance corresponding to the first computing power instance. In this way, efficiency of determining a computing power instance can be improved, thereby improving data processing efficiency.

## Description

This application claims priority to Chinese Patent Application No. 202210012259.2, filed with the China National Intellectual Property Administration on January 6, 2022 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

In a 5th generation mobile communication technology (5th generation mobile communication technology, 5G) mobile/multi-access edge computing (mobile/multi-access edge computing, MEC) solution, MEC may be co-located with a user plane function (user plane function, UPF) network element. The MEC and the UPF network element may even be downward deployed on an access network device and co-located with the access network device. A computing power network is a new information infrastructure that allocates and flexibly schedules computing, storage, and network resources between a cloud, a network, and an edge (namely, an edge) based on service requirements. After the computing power network is introduced to the 5G MEC, when a terminal device transmits data to a network device, how the network device determines a computing power instance used by the data in the terminal device is very important.

### SUMMARY

Embodiments of this application disclose a communication method, apparatus, and system, to improve data processing efficiency.

A first aspect discloses a communication method. The communication method may be applied to a terminal device, or may be applied to a module (for example, a chip) in the terminal device. An example in which the communication method is applied to the terminal device is used below for description. The communication method may include:
determining a first data packet based on a first computing power instance; and
sending the first data packet to a network device, where the first data packet includes information about the first computing power instance.

In this embodiment, the first data packet sent by the terminal device to the network device may include the information about the first computing power instance used by the terminal device to determine the first data packet, so that the network device may determine the first computing power instance based on the information about the first computing power instance, may determine a corresponding second computing power instance based on the first computing power instance, and may further process the first data packet based on the second computing power instance. It can be learned that the first data packet sent by the terminal device includes the information about the first computing power instance. Therefore, the network device may quickly determine, based on the information about the first computing power instance, the first computing power instance used by the terminal device to determine the first data packet, and may further determine the second computing power instance used by the network device to process the first data packet and process the first data packet, so that efficiency of determining a computing power instance can be improved, thereby improving data processing efficiency. In addition, because the terminal device does not need to indicate, by using additional signaling, the first computing power instance for determining the first data packet, but includes the information about the first computing power instance in the first data packet, a quantity of to-be-transmitted signaling can be reduced, thereby saving transmission resources. Further, because a data packet sent by the terminal device includes information about a computing power instance, the network device may accurately determine, based on the information about the computing power instance, the computing power instance used by the terminal device. This can avoid a case in which the computing power instance determined by the network device is different from the computing power instance used by the terminal device, so that synchronization of computation and connection can be ensured.

In a possible implementation, the communication method may further include:
receiving first configuration information from the network device, where the first configuration information includes N computing power instances and N logical channels (logical channels, LCHs) or N computing radio bearers (computing radio bearers, CRBs), the N computing power instances are in one-to-one correspondence with the N LCHs or the N CRBs, N is an integer greater than or equal to 2, and the N computing power instances include the first computing power instance.

In this embodiment, the terminal device may receive, from the network device, configuration information that includes N computing power instances and N LCHs or N CRBs. The N computing power instances are in one-to-one correspondence with the N LCHs or the N CRBs. It can be learned that the network device configures a one-to-one correspondence between the N computing power instances and the N LCHs or the N CRBs for the terminal device. Therefore, one computing power instance may uniquely correspond to one LCH or one CRB, and the terminal device may indicate, to the network device by using an LCH or a CRB in which a data packet is carried, a computing power instance used to determine the data packet without indicating the computing power instance by using dedicated information, that is, the information about the first computing power instance, or signaling, so that a data amount of the first data packet can be reduced, thereby saving transmission resources.

In a possible implementation, that the first data packet includes information about the first computing power instance includes:

The first data packet is carried in an LCH or a CRB corresponding to the first computing power instance.

In this embodiment, when there is the one-to-one correspondence between the N computing power instances and the N LCHs or the N CRBs in the terminal device, the terminal device may indicate, to the network device by using an LCH or a CRB in which a data packet is carried, a computing power instance used to determine the data packet without indicating the computing power instance by using dedicated information, that is, the information about the first computing power instance, so that a data amount of the first data packet can be reduced, thereby saving transmission resources.

In a possible implementation, the information about the first computing power instance includes an identifier of the first computing power instance.

In this embodiment, the terminal device may indicate, to the network device by using an identifier of a computing power instance included in a data packet, the computing power instance used by the terminal device to determine the data packet. Different computing power instances have different identifiers, and an identifier of a computing power instance is irrelevant to other information such as an LCH and a CRB. Therefore, indicating the computing power instance by using the identifier of the computing power instance may not be affected by the other information, and a quantity of computing power instances is not limited, so that flexibility of indicating the computing power instance can be improved.

In a possible implementation, the information about the first computing power instance includes a sequence number (sequence number, SN) and a status indication that are of the first data packet. The status indication indicates whether the first data packet is a last data packet determined based on the first computing power instance.

In this embodiment, the terminal device may indicate, to the network device by using an SN and a status indication that are of a data packet and that are included in the data packet, a computing power instance used by the terminal device to determine the data packet. Because the status indication is additionally added to the original data packet, and the computing power instance used to determine the data packet may be indicated, a change to the data packet is small, and compatibility of the data packet can be improved. In addition, only the status indication is added, and bit information needed by the status indication is small. Therefore, performing indication by using a large quantity of bits can be avoided, thereby saving transmission resources. Further, the status indication is irrelevant to other information such as an LCH and a CRB. Therefore, indicating the computing power instance by using the SN and the status indication may not be affected by the other information, and a quantity of computing power instances is not limited, so that flexibility of indicating the computing power instance can be improved.

In a possible implementation, the communication method may further include:
receiving first indication information from the network device, where the first indication information indicates the first computing power instance.

In this embodiment, the terminal device may receive, from the network device, indication information indicating the first computing power instance, and may use, activate, or execute the first computing power instance based on the indication information. It can be learned that a computing power instance used by the terminal device is determined and indicated by the network device. The network device may determine, based on information such as a location of the terminal device, a service type of transmission data, and a service scenario, a computing power instance to be used by the terminal device, and further indicate the computing power instance. In this way, a case in which the terminal device uses a fixed computing power instance can be avoided, and different computing power instances can be indicated to the terminal device based on different requirements, so that flexibility of using the computing power instance can be improved.

In a possible implementation, that the terminal device determines a first data based on a first computing power instance may include:

The terminal device determines the first data packet in an executor corresponding to the first computing power instance based on the first computing power instance.

In this embodiment, different computing power instances may need different executors. Therefore, the terminal device may determine the first data packet in the executor corresponding to the first computing power instance based on the first computing power instance, to avoid a case in which the first computing power instance cannot be used because a computing power environment does not meet a requirement.

In a possible implementation, the communication method may further include:
receiving a second data packet from the network device, where the second data packet is determined by the network device based on a second computing power instance, the second data packet includes the information about the first computing power instance, and the second computing power instance is a computing power instance corresponding to the first computing power instance; and
processing the second data packet based on the first computing power instance.

In this embodiment, the terminal device may receive, from the network device, the second data packet that includes the information about the first computing power instance, so that the terminal device may determine the first computing power instance based on the information about the first computing power instance, and may further process the second data packet based on the first computing power instance. It can be learned that the second data packet sent by the network device includes the information about the first computing power instance to be used by the terminal device. Therefore, the terminal device may quickly determine, based on the information about the first computing power instance, the to-be-used first computing power instance, and may further process the second data packet based on the determined first computing power instance, so that efficiency of determining a computing power instance can be improved, thereby improving data processing efficiency. In addition, because the network device does not need to indicate, by using additional signaling, the first computing power instance to be used by the second data packet, a quantity of to-be-transmitted signaling can be reduced, thereby saving transmission resources. Further, because a data packet sent by the network device includes information about a computing power instance, the terminal device may accurately determine, based on the information about the computing power instance, the computing power instance to be used by the terminal device. This can avoid a case in which the computing power instance determined by the terminal device is different from the computing power instance used by the terminal device, so that synchronization of computation and connection can be ensured.

A second aspect discloses a communication method. The communication method may be applied to a network device, or may be applied to a module (for example, a chip) in the network device. An example in which the communication method is applied to the network device is used below for description. The communication method may include:
receiving a first data packet from a terminal device, where the first data packet includes information about a first computing power instance; and
processing the first data packet based on a second computing power instance, where the second computing power instance is a computing power instance corresponding to the first computing power instance.

In this embodiment, the network device may receive, from the terminal device, the first data packet that includes the information about the first computing power instance, then may determine the first computing power instance based on the information about the first computing power instance, may determine the corresponding second computing power instance based on the first computing power instance, and may further process the first data packet based on the second computing power instance. It can be learned that the first data packet received by the network device from the terminal device includes the information about the first computing power instance. Therefore, the network device may quickly determine, based on the information about the first computing power instance, the first computing power instance used by the terminal device to determine the first data packet, and may further determine the second computing power instance used by the network device to process the first data packet and process the first data packet, so that efficiency of determining a computing power instance can be improved, thereby improving data processing efficiency. In addition, because the terminal device does not need to indicate, by using additional signaling, the first computing power instance for determining the first data packet, but includes the information about the first computing power instance in the first data packet, a quantity of to-be-transmitted signaling can be reduced, thereby saving transmission resources. Further, because a data packet sent by the terminal device includes information about a computing power instance, the network device may accurately determine, based on the information about the computing power instance, the computing power instance used by the terminal device. This can avoid a case in which the computing power instance determined by the network device is different from the computing power instance used by the terminal device, so that synchronization of computation and connection can be ensured.

In a possible implementation, the communication method may further include:
sending first configuration information to the terminal device, where the first configuration information includes N computing power instances and N LCHs or N CRBs, the N computing power instances are in one-to-one correspondence with the N LCHs or the N CRBs, N is an integer greater than or equal to 2, and the N computing power instances include the first computing power instance.

In this embodiment, the network device configures configuration information including N computing power instances and N LCHs or N CRBs for the terminal device. The N computing power instances are in one-to-one correspondence with the N LCHs or the N CRBs. It can be learned that the network device configures a one-to-one correspondence between the N computing power instances and the N LCHs or the N CRBs for the terminal device. Therefore, one computing power instance may uniquely correspond to one LCH or one CRB, and the terminal device may indicate, to the network device by using an LCH or a CRB in which a data packet is carried, a computing power instance used to determine the data packet without indicating the computing power instance by using dedicated information, that is, the information about the first computing power instance, or signaling, so that a data amount of the first data packet can be reduced, thereby saving transmission resources.

In a possible implementation, that the first data packet includes information about a first computing power instance includes:

The first data packet is carried in an LCH or a CRB corresponding to the first computing power instance.

In this embodiment, when there is the one-to-one correspondence between the N computing power instances and the N LCHs or the N CRBs in the terminal device, the network device may determine, by using an LCH or a CRB in which a data packet is carried, a computing power instance used by the terminal device to determine the data packet without indicating the computing power instance by using dedicated information, that is, the information about the first computing power instance, so that a data amount of the first data packet can be reduced, thereby saving transmission resources.

In a possible implementation, the information about the first computing power instance includes an identifier of the first computing power instance.

In this embodiment, the network device may determine, by using an identifier of a computing power instance included in a data packet, the computing power instance used by the terminal device to determine the data packet. Different computing power instances have different identifiers, and an identifier of a computing power instance is irrelevant to other information such as an LCH and a CRB. Therefore, indicating the computing power instance by using the identifier of the computing power instance may not be affected by the other information, and a quantity of computing power instances is not limited, so that flexibility of indicating the computing power instance can be improved.

In a possible implementation, the information about the first computing power instance includes an SN and a status indication that are of the first data packet. The status indication indicates whether the first data packet is a last data packet determined based on the first computing power instance.

In this embodiment, the network device may determine, by using an SN and a status indication that are of a data packet and that are included in the data packet, a computing power instance used by the terminal device to determine the data packet. Because the status indication is additionally added to the original data packet, and the computing power instance used to determine the data packet may be indicated, a change to the data packet is small, and compatibility of the data packet can be improved. In addition, only the status indication is added, and a quantity of bits needed by the status indication is small. Therefore, performing indication by using a large quantity of bits can be avoided, thereby saving transmission resources. Further, the status indication is irrelevant to other information such as an LCH and a CRB. Therefore, indicating the computing power instance by using the SN and the status indication may not be affected by the other information, and a quantity of computing power instances is not limited, so that flexibility of indicating the computing power instance can be improved.

In a possible implementation, the communication method may further include:
sending first indication information to the terminal device, where the first indication information indicates the first computing power instance.

In this embodiment, the network device may send, to the terminal device, indication information indicating the first computing power instance, so that the terminal device can use, activate, or execute the first computing power instance based on the indication information. It can be learned that the network device may determine, based on information such as a location of the terminal device, a service type of transmission data, and a service scenario, a computing power instance to be used by the terminal device, and further indicate the computing power instance. In this way, a case in which the terminal device uses a fixed computing power instance can be avoided, and different computing power instances can be indicated to the terminal device based on different requirements, so that flexibility of using the computing power instance can be improved.

In a possible implementation, that the network device processes the first data packet based on a second computing power instance may include:

The network device processes the first data packet in an executor corresponding to the second computing power instance by using the second computing power instance.

In this embodiment, different computing power instances may need different executors. Therefore, the network device may process the first data packet in the executor corresponding to the second computing power instance by using the second computing power instance, to avoid a case in which the second computing power instance cannot be used because a computing power environment does not meet a requirement.

In a possible implementation, the communication method may further include:
determining a second data packet based on the second computing power instance; and
sending the second data packet to the terminal device, where the second data packet includes the information about the first computing power instance.

In this embodiment, the second data packet sent by the network device to the terminal device may include the information about the first computing power instance to be used by the terminal device, so that the terminal device may determine the first computing power instance based on the information about the first computing power instance and may further process the second data packet based on the first computing power instance. It can be learned that the second data packet sent by the network device includes the information about the first computing power instance. Therefore, the terminal device may quickly determine, based on the information about the first computing power instance, the first computing power instance to be used by the terminal device, so that efficiency of determining a computing power instance can be improved, thereby improving data processing efficiency. In addition, because the network device does not need to indicate, by using additional signaling, the computing power instance to be used by the terminal device, a quantity of to-be-transmitted signaling can be reduced, thereby saving transmission resources. Further, because a data packet sent by the network device includes information about a computing power instance, the terminal device may accurately determine, based on the information about the computing power instance, the computing power instance to be used by the terminal device. This can avoid a case in which the computing power instance determined by the terminal device is different from the computing power instance actually used by the terminal device, so that synchronization of computation and connection can be ensured.

A third aspect discloses a communication apparatus. The communication apparatus may be a terminal device or may be a module (for example, a chip) in the terminal device. The communication apparatus may include:
a processing unit, configured to determine a first data packet based on a first computing power instance; and
a communication unit, configured to send the first data packet to a network device, where the first data packet includes information about the first computing power instance.

In a possible implementation, the communication unit is further configured to receive first configuration information from the network device. The first configuration information includes N computing power instances and N LCHs or N CRBs, the N computing power instances are in one-to-one correspondence with the N LCHs or the N CRBs, N is an integer greater than or equal to 2, and the N computing power instances include the first computing power instance.

In a possible implementation, that the first data packet includes information about the first computing power instance includes:

The first data packet is carried in an LCH or a CRB corresponding to the first computing power instance.

In a possible implementation, the information about the first computing power instance includes an identifier of the first computing power instance.

In a possible implementation, the information about the first computing power instance includes an SN and a status indication that are of the first data packet. The status indication indicates whether the first data packet is a last data packet determined based on the first computing power instance.

In a possible implementation, the communication unit is further configured to receive first indication information from the network device. The first indication information indicates the first computing power instance.

In a possible implementation, the processing unit is specifically configured to determine the first data packet in an executor corresponding to the first computing power instance based on the first computing power instance.

In a possible implementation, the communication unit is further configured to receive a second data packet from the network device. The second data packet is determined by the network device based on a second computing power instance, the second data packet includes the information about the first computing power instance, and the second computing power instance is a computing power instance corresponding to the first computing power instance.

The processing unit is further configured to process the second data packet based on the first computing power instance.

A fourth aspect discloses a communication apparatus. The communication apparatus may be a network device, or may be a module (for example, a chip) in the network device. The communication apparatus may include:
a communication unit, configured to receive a first data packet from a terminal device, where the first data packet includes information about a first computing power instance; and
a processing unit, configured to process the first data packet based on a second computing power instance, where the second computing power instance is a computing power instance corresponding to the first computing power instance.

In a possible implementation, the communication unit is further configured to send first configuration information to the terminal device. The first configuration information includes N computing power instances and N LCHs or N CRBs, the N computing power instances are in one-to-one correspondence with the N LCHs or the N CRBs, N is an integer greater than or equal to 2, and the N computing power instances include the first computing power instance.

In a possible implementation, that the first data packet includes information about a first computing power instance includes:

The first data packet is carried in an LCH or a CRB corresponding to the first computing power instance.

In a possible implementation, the information about the first computing power instance includes an identifier of the first computing power instance.

In a possible implementation, the information about the first computing power instance includes a sequence number SN and a status indication that are of the first data packet. The status indication indicates whether the first data packet is a last data packet determined based on the first computing power instance.

In a possible implementation, the communication unit is further configured to send first indication information to the terminal device. The first indication information indicates the first computing power instance.

In a possible implementation, the processing unit is specifically configured to process the first data packet in an executor corresponding to the second computing power instance by using the second computing power instance.

In a possible implementation, the processing unit is further configured to determine a second data packet based on the second computing power instance.

The communication unit is further configured to send the second data packet to the terminal device. The second data packet includes the information about the first computing power instance.

A fifth aspect discloses a communication apparatus. The communication apparatus may include a processor coupled to a storage. The processor invokes a computer program stored in the storage to implement the communication method according to any one of the first aspect or the implementations of the first aspect.

In a possible implementation, the communication apparatus may further include the storage.

In a possible implementation, the communication apparatus may further include a transceiver. The transceiver is configured to: receive information from a communication apparatus other than the communication apparatus, and output information to a communication apparatus other than the communication apparatus.

A sixth aspect discloses a communication apparatus. The communication apparatus may include a processor coupled to a storage. The processor invokes a computer program stored in the storage to implement the communication method according to any one of the second aspect or the implementations of the second aspect.

In a possible implementation, the communication apparatus may further include the storage.

In a possible implementation, the communication apparatus may further include a transceiver. The transceiver is configured to: receive information from a communication apparatus other than the communication apparatus, and output information to a communication apparatus other than the communication apparatus.

A seventh aspect discloses a communication system. The communication system includes the communication apparatus according to the fifth aspect and the communication apparatus according to the sixth aspect.

An eighth aspect discloses a computer-readable storage medium. The computer-readable storage medium stores a computer program or computer instructions. When the computer program or the computer instructions are run on a computer, the communication methods according to the foregoing aspects are performed.

A ninth aspect discloses a chip, including a processor, configured to execute a computer program stored in a storage. When the computer program is executed, the chip is enabled to perform the foregoing methods.

In a possible implementation, the storage is located outside the chip.

A tenth aspect discloses a computer program product. The computer program product includes a computer program or computer instructions. When the computer program or the computer instructions are run on a computer, the foregoing communication methods are performed.

It may be understood that, the communication apparatuses disclosed in the third aspect, the fourth aspect, the fifth aspect, and the sixth aspect, the communication system disclosed in the seventh aspect, the computer-readable storage medium disclosed in the eighth aspect, the chip disclosed in the ninth aspect, and the computer program product disclosed in the tenth aspect each are configured to perform the method disclosed in any one of the first aspect and the possible implementations of the first aspect, or the method disclosed in any one of the second aspect and the possible implementations of the second aspect of this application. Therefore, for beneficial effects that can be achieved, refer to the beneficial effects in the corresponding methods, and details are not described herein again.

### BRIEF DESCRIPTION OF DRAWINGS

To describe embodiments of this application more clearly, the following briefly describes the accompanying drawings that need to be used in embodiments. It is clear that, for persons of ordinary skill in the art, other drawings may be obtained according to these accompanying drawings without creative efforts.
FIG. 1 is a diagram of a system architecture according to an embodiment of this application;
FIG. 2 is a diagram of downward MEC deployment according to this application;
FIG. 3 is a diagram of a network structure according to an embodiment of this application;
FIG. 4 is a diagram of a protocol stack according to an embodiment of this application;
FIG. 5 is a diagram of a confusion between computing power instances according to an embodiment of this application;
FIG. 6 is a diagram of another confusion between computing power instances according to an embodiment of this application;
FIG. 7 is a schematic flowchart of a communication method according to an embodiment of this application;
FIG. 8 is a diagram of switching between computing power instances according to this application;
FIG. 9 is a diagram of a correspondence between an executor and a computing power instance according to an embodiment of this application;
FIG. 10 is a diagram of another correspondence between an executor and a computing power instance according to an embodiment of this application;
FIG. 11 is a diagram of still another correspondence between an executor and a computing power instance according to an embodiment of this application;
FIG. 12 is a diagram of still another correspondence between an executor and a computing power instance according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

Embodiments of this application disclose a communication method, apparatus, and system, to improve data processing efficiency. Details are respectively described in the following.

Apparently, the described embodiments are merely some but not all of embodiments of this application. An "embodiment" mentioned in this specification means that a particular feature, structure, or feature described with reference to an embodiment may be included in at least one embodiment of this application. The phrase appearing at various locations in this specification does not necessarily refer to a same embodiment, and is not an independent or alternative embodiment mutually exclusive to another embodiment. It may be explicitly and implicitly understood by persons skilled in the art that embodiments described in this specification may be combined with another embodiment. All other embodiments obtained by persons of ordinary skill in the art based on embodiments of this application without creative efforts shall fall within the protection scope of this application.

In the specification, claims, and accompanying drawings of this application, the terms "first", "second", "third", and the like are intended to distinguish between different objects but do not indicate a particular order. In addition, the terms "including" and "having" and any other variants thereof are intended to cover a non-exclusive inclusion. For example, a series of steps or units are included, or optionally, unlisted steps or units are included, or optionally, other steps or units inherent to such a process, method, product, or device are included.

The accompanying drawings show only a part rather than all of content related to this application. Before example embodiments are discussed in detail, it should be noted that some example embodiments are described as processing or methods depicted as flowcharts. Although the flowchart describes various operations (or steps) as sequential processing, many of these operations may be implemented in parallel, concurrently, or simultaneously. In addition, the sequence of the operations can be rearranged. The processing may be terminated when the operation is completed, but may further have additional steps that are not included in the accompanying drawings.

Terminologies such as "unit" used in this specification are used to indicate computer-related entities, hardware, firmware, combinations of hardware and software, software, or software being executed. For example, a unit may be, but is not limited to, a process that is run on a processor, the processor, an object, an executable file, an execution thread, or a program, and/or distributed between two or more computers. In addition, these units may be executed from various computer-readable media that store various data structures. The units may communicate by using a local and/or remote process and based on, for example, a signal having one or more data packets (for example, data from a second unit interacting with another unit in a local system, a distributed system, and/or across a network such as an internet interacting with another system by using the signal).

In addition, in embodiments of this application, unless otherwise specified, a quantity of nouns indicates "a singular noun or a plural noun", that is, "one or more". "At least one" means one or more, "a plurality of" means two or more, and "a plurality of" in "one or more" means two or more. The term "and/or" describes an association relationship between associated objects and indicates that three relationships may exist. For example, A and/or B may indicate the following three cases: Only A exists, both A and B exist, and only B exists. A and B each may be singular or plural. A character "/" usually indicates an "or" relationship between the associated objects. For example, A/B indicates A or B. "At least one item (piece) of the following" or a similar expression thereof means any combination of these items, including a singular item (piece) or any combination of plural items (pieces). For example, at least one item (piece) of a, b, or c indicates a, b, c, a and b, a and c, b and c, or a, b, and c, where a, b, and c may be singular or plural.

To better understand embodiments of this application, the following first describes related technologies in embodiments of this application.

**Mobile/multi-access edge computing (mobile/multi-access edge computing, MEC)**

The European telecommunications standards institute (European telecommunications standards institute, ETSI) released MEC-related heavyweight standards in 2016. The ETSI-defined MEC is a platform that provides an internet technology (internet technology, IT)-based architecture and cloud computing capabilities for a user on a radio access network (radio access network, RAN) network close to a mobile user, and may be considered as a cloud server that runs at an edge of a mobile network and runs a specific task.

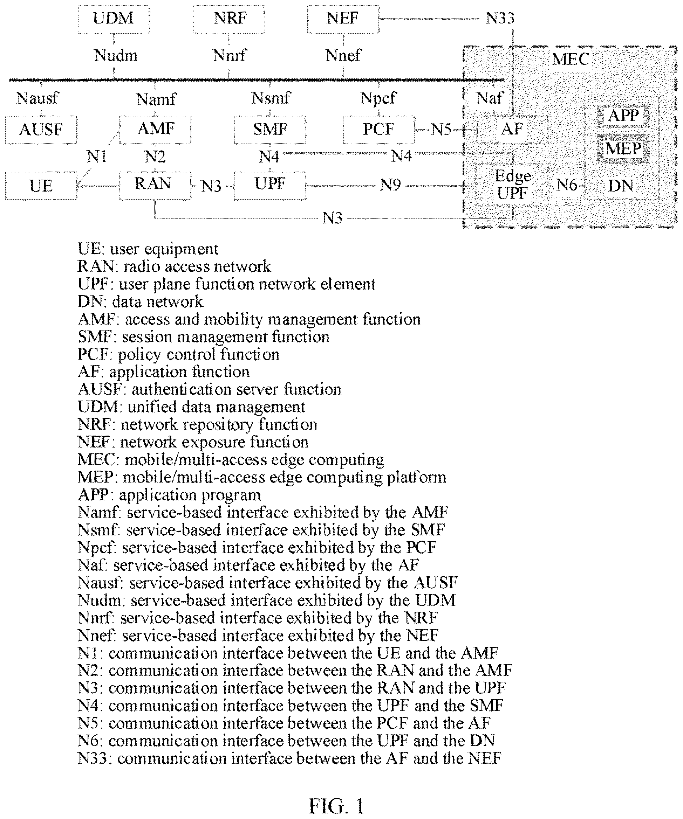

FIG. 1 is a diagram of a system architecture according to an embodiment of this application. As shown in FIG. 1, with reference to a 5G architecture defined by the 3rd generation partnership project (3rd generation partnership project, 3GPP), an actual deployment location of MEC in a wireless network generally corresponds to a local user plane function (user plane function, UPF) network element in a 5G core network, that is, an edge UPF network element in FIG. 1. Local offloading and breakout of a service may be implemented between the local UPF network element and a local data network (data network, DN) through an N6 interface, so that local processing of the service can be implemented, thereby achieving an acceleration effect.

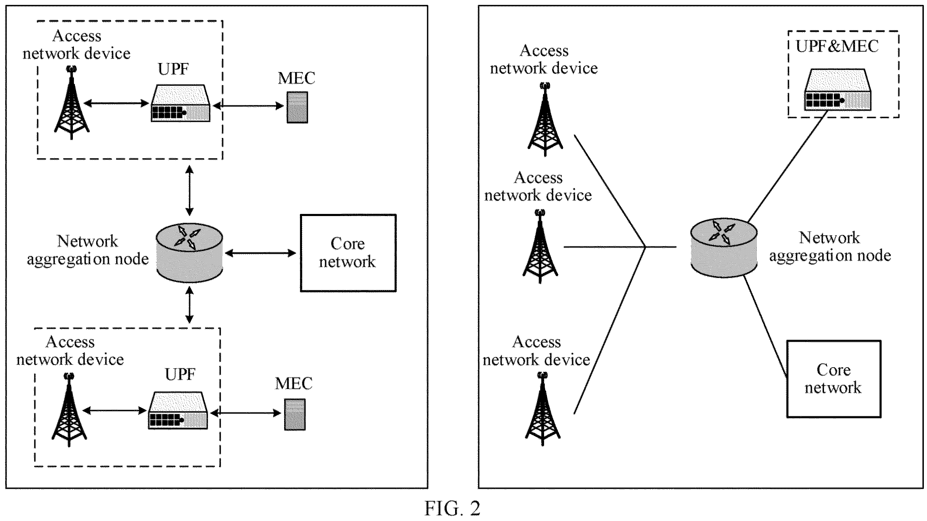

It can be learned from the 3GPP 5G system architecture shown in FIG. 1 that the MEC is an invisible network element in the 3GPP system architecture, and does not belong to a network architecture scope defined by the 3GPP. Therefore, the MEC does not directly affect the 3GPP system architecture. In an MEC application, a processing location of service data is downward deployed from a remote data network (generally, a public cloud) to local MEC based on an existing core network data local breakout mechanism of the 3GPP. This is the most essential reason for the MEC to implement service acceleration. To be specific, an application that processes service data is moved from a physical deployment location to a location close to a core network of a wireless network as much as possible, that is, the application is co-located with the core network UPF network element. FIG. 2 is a diagram of downward MEC deployment according to this application. As shown in FIG. 2, MEC/a local UPF network element may be deployed to an access network device, that is, the MEC/the local UPF network element and the access network device may be downward deployed on a same physical node, that is, the MEC/the local UPF network element may be co-located with the access network device. Alternatively, the MEC/the local UPF network element may be co-located with a network aggregation node.

The deployment of the MEC meets requirements of an industry on real-time performance and data security to some extent. However, a 3GPP logical architecture and a data protocol processing procedure still need to be further optimized. A communication network capability is open to a network management platform, and a distributed add-on computing power is also presented on the network management platform. Therefore, services such as an artificial intelligence (artificial intelligence, AI) application can be optimized, deployed, and adjusted after network information and distributed computing power resources are comprehensively considered.

However, these services such as AI on such a computing power are deployed through a management plane, which is not dynamic enough. Consequently, a network and a computing power cannot be unified on a control plane, and cannot respond to user mobility and a network change in a timely manner. Network connection and service connection are independent of each other and belong to add-on models. Therefore, optimal resource utilization is sometimes unachievable.

### Computing power network

The computing power network is a new information infrastructure that allocates and flexibly schedules computing, storage, and network resources between a cloud, a network, and an edge based on service requirements. In the early stages of network design, a computing power is considered as a basic element of a network. The computing power is widely distributed on the network, that is, the computing power is widely distributed across clouds, edges, ends, and intermediate network elements. The computing power is integrated into the network. Computing power services, connection services, and services that comprehensively consider a computing power and connection are all basic services that can be provided by the network.

In a new computing power network architecture, each network element has not only control and forwarding capabilities, but also a computing capability. In addition to network elements, computing nodes are further deployed in the network. The computing power generated in this computing-network integration mode is referred to as a network native computing power. The network native computing power can promote the development and deployment of native intelligence, better support ubiquitous access network devices and terminal devices that combining sensing, communication, and computing capabilities, implement large-scale intelligent distributed collaboration services, and maximize the effectiveness of communication and a computing power in the network, while also being adapted to data distribution, and protecting data privacy. In the new network architecture, control planes of a network element and a computing unit are streamlined to make up for the disadvantages of a computing power convergence category 2, and respond to mobility and network changes in a timely manner. The network native computing power can promote the generation and development of future intelligent applications, such as immersive cloud extended reality (extended reality, XR), holographic communication, sensory interconnection, smart interaction, communication sensing, and digital twin.

It can be learned that, in the 5G MEC solution, the UPF network element may be co-located with the MEC, and the MEC and the UPF network elements may even be downward deployed in an access network device and co-located with the access network device. In other words, a computing capability is also introduced to 5G, but does not go far enough. It basically retains the scope and global architecture features of the previous generation of products, and focuses on computing capability downward deployment. The network and computing parts are loosely coupled, which means that they are not native capabilities of the architecture. Therefore, there is room for further improvement in efficiency, deployment costs, security, and privacy protection.

In the 5G MEC solution, the MEC may be co-located with the core network UPF network element. The MEC and the UPF network element may even be downward deployed on the access network device and co-located with the access network device. However, in terms of a logical architecture and a control management mechanism, the MEC and the UPF network element are still two independent systems. Therefore, when a connection policy needs to be adjusted due to a computing power change or when a computing power needs to be adjusted due to a connection pipe change, an adjustment latency is large, for example, a minute-level adjustment latency. In addition, data needed for computing needs to be routed by the local (local) UPF network element to the MEC for computing and migration, and a transmission latency for computing data is large during computing migration.

To resolve the problems, management of the connection and the computing power may be streamlined on the management plane. However, after the management of the connection and the computing power is streamlined on the management plane, when a terminal device transmits data to a network device, how the network device determines a computing power instance used by the data in the terminal device is very important.

In embodiments of this application, a first data packet sent by the terminal device to the network device may include information about a first computing power instance for determining the first data packet. After receiving the first data packet from the terminal device, the network device may determine the first computing power instance based on the information about the first computing power instance included in the first data packet, then may determine a second computing power instance corresponding to the first computing power instance, and may further process the first data packet based on the second computing power instance. It can be learned that the network device may determine, based on information about a computing power instance included in a data packet, the computing power instance used by the terminal device to determine the data packet, so that the network device may determine a computing power instance to be used by the network device, to improve data processing efficiency.

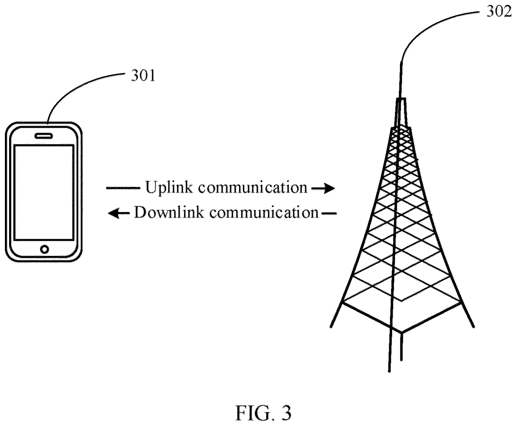

To better understand embodiments of this application, the following first describes a network architecture in embodiments of this application. FIG. 3 is a diagram of a network structure according to an embodiment of this application. As shown in FIG. 3, the network architecture may include a terminal device 301 and a network device 302. Communication between the terminal device 301 and the network device 302 may include uplink communication (namely, communication from the terminal device 301 to the network device 302) and downlink communication (namely, communication from the network device 302 to the terminal device 301). In the uplink communication, the terminal device 301 is configured to send an uplink signal to the network device 302. The network device 302 is configured to receive the uplink signal from the terminal device 301. In the downlink communication, the network device 302 is configured to send a downlink signal to the terminal device 301. The terminal device 301 is configured to receive the downlink signal from the network device 302.

The terminal device may be a wireless terminal device that can receive scheduling and indication information of the network device. The wireless terminal device may be a device that provides voice and/or data connectivity for a user, a handheld device with a wireless connection function, or another processing device connected to a wireless modem. The terminal device may communicate with one or more core networks or an internet through a radio access network (radio access network, RAN).

The terminal device may also be referred to as user equipment (user equipment, UE), a mobile station (mobile station, MS), a mobile terminal (mobile terminal, MT), or the like. The terminal device may be a handheld terminal, a customer premise equipment (customer premise equipment, CPE) notebook computer, a subscriber unit (subscriber unit), a cellular phone (cellular phone), a smartphone (smartphone), a computing device, a wireless data card, a personal digital assistant (personal digital assistant, PDA) computer, a tablet computer, a wireless modem (modem), a handheld device (handheld), a laptop computer (laptop computer), a session initiation protocol (session initiation protocol, SIP) phone, a cordless phone (cordless phone) or a wireless local loop (wireless local loop, WLL) station, a machine type communication (machine type communication, MTC) terminal, a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless data card, a wireless terminal in a smart grid (smart grid), a wireless terminal in transportation safety (transportation safety), a wireless terminal in a smart city (smart city), a wireless terminal in a smart home, a flight device (for example, an intelligent robot, a hot balloon, an uncrewed aerial vehicle, or an aircraft), or another device that can access to a network.

In addition, the terminal device may alternatively be a terminal device in a future communication system (for example, a 6th generation mobile communication technology (6th generation mobile communication technology, 6G) communication system), a terminal device in a future evolved public land mobile network (public land mobile network, PLMN), or the like. For example, a 6G network may further extend a form and a function of a 5th generation mobile communication technology (5th generation mobile communication technology, 5G) communication terminal device. The 6G terminal device includes but is not limited to a vehicle, a cellular network terminal device (integrated with a function of a satellite terminal), an uncrewed aerial vehicle, and an internet of things (internet of things, IoT).

The network device is a device that provides radio access for the terminal device, and is mainly responsible for functions such as radio resource management, quality of service (quality of service, QoS) flow management, and data compression and encryption on an air interface side. The network device may include base stations in various forms, for example, a macro base station, a micro base station (also referred to as a small cell), a relay station, an access point, and a satellite. The network device may further include an evolved NodeB (evolved NodeB, eNB or eNodeB) in long term evolution (long term evolution, LTE), a base station gNB in a 5G network, a base station in a future evolved public land mobile network (public land mobile network, PLMN), a broadband network gateway (broadband network gateway, BNG), an aggregation switch or a non-3GPP access device, a wireless fidelity (wireless fidelity, Wi-Fi) access node (access point), a transmission reception point (transmitting and receiving point, TRP), a transmission point (transmitting point, TP), a mobile switching center, or a device having a base station function in device-to-device (Device-to-Device, D2D), vehicle-to-everything (vehicle-to-everything, V2X), and machine-to-machine (machine-to-machine, M2M) communication, or the like.

It should be noted that the network architecture shown in FIG. 3 is not limited to including only the terminal device and the network device shown in the figure, and may further include another terminal device and network device that are not shown in the figure. Details are not listed herein in this application.

The foregoing network architecture may be used in communication systems evolved after 5G, such as a narrowband-internet of things (narrow band-internet of things, NB-IoT) system, a global system for mobile communications (global system for mobile communications, GSM), an enhanced data rate GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a wireless fidelity (wireless fidelity, Wi-Fi) system, a long term evolution (long term evolution, LTE) system, a 5G system, and a 6th generation mobile communication technology (6th generation mobile networks, 6G).

Different computing nodes (including the network device and the terminal device) in a communication network may interact with each other through a computing resource control (computing resource control, CRC) layer. Therefore, the network device may configure, for the terminal device through the CRC layer, information related to a computing power such as a computing power instance. The terminal device may execute the computing power instance configured by the network device.

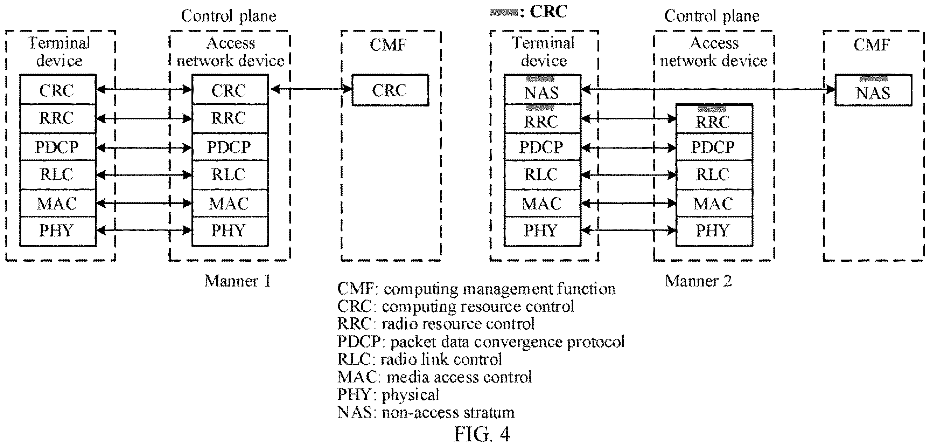

FIG. 4 is a diagram of a protocol stack according to an embodiment of this application.

FIG. 4 is described by using an example in which a network device includes an access network device and a computing management function (computing management function, CMF) network element, and the CMF network element is configured to implement an information processing process related to a CRC layer.

It should be noted that the CMF network element may be a network element or an entity that implements a logical function, and may be deployed in a core network device, or may be deployed in the access network device. This is not limited herein.

As shown in FIG. 4, different computing nodes may interact with each other through the CRC in two manners.

In a manner 1, a terminal device and the access network device may each include one or more layers of a CRC layer, a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. The CMF network element may include a CRC layer. It can be learned that, in comparison with an existing protocol stack, the CRC layer is added to a protocol stack of the terminal device and the network device. Therefore, the terminal device, the access network device, and the CMF network element each have a CRC layer, so that the terminal device, the access network device, and the CMF network element can communicate with each other through the CRC layers.

In a manner 2, the terminal device may include one or more layers of a non-access stratum (non access stratum, NAS) layer, an RRC layer, a PDCP layer, an RLC layer, a MAC layer, and a PHY layer. The access network device may include one or more layers of an RRC layer, a PDCP layer, an RLC layer, a MAC layer, and a PHY layer. The CMF network element may include a NAS layer. The CRC may be implemented by using an information element (information element, IE) or an RRC container (container) of the RRC layer, or may be implemented by using an IE or a NAS container of the NAS layer. Therefore, the terminal device may communicate with the access network device by using the CRC at the RRC layer, and the terminal device may communicate with the CMF network element by using the CRC at the NAS layer.

To better understand embodiments of this application, the following first describes an application scenario of embodiments of this application.

When the terminal device communicates with the network device, some tasks need to be completed by the terminal device and the network device together, that is, need to be jointly completed by the terminal device and the network device, that is, need to be completed by the terminal device in coordination with the network device. In this case, the task may be referred to as a coordination task. When the terminal device and the network device perform the coordination task, there needs to be a correspondence between computing power instances used by the terminal device and the network device.

For example, a computing power instance 1 and a computing power instance 2 may be a group of paired computing power instances, and have a correspondence. Output data of the computing power instance 1 needs to be used as input data of the computing power instance 2. A computing power instance 3 and a computing power instance 4 may be a group of paired computing power instances, and have a correspondence. Output data of the computing power instance 3 needs to be used as input data of the computing power instance 4. Therefore, when the terminal device uses the computing power instance 1, the network device needs to use the corresponding computing power instance 2. When the terminal device uses the computing power instance 3, the network device needs to use the corresponding computing power instance 4. When the terminal device uses the computing power instance 1, and the network device uses the computing power instance 4, when the terminal device sends data determined based on the computing power instance 1 to the network device, in a case, the network device cannot use the data as the input data of the computing power instance 4. For example, the output data of the computing power instance 1 is 5 bits, and the input data of the computing power instance 4 is 10 bits. In another case, the network device may use the data as the input data of the computing power instance 4. However, because the computing power instance 1 does not correspond to the computing power instance 4, finally obtained output data of the computing power instance 4 is inaccurate or even incorrect. Consequently, a use effect of the computing power instance is affected. For example, the output data of the computing power instance 1 is 10 bits, and the input data of the computing power instance 4 is also 10 bits.

The problem that the computing power instances do not correspond may be caused by different switching time of the computing power instances of the terminal device and the network device, or may be caused by data retransmission by the terminal device to the network device.

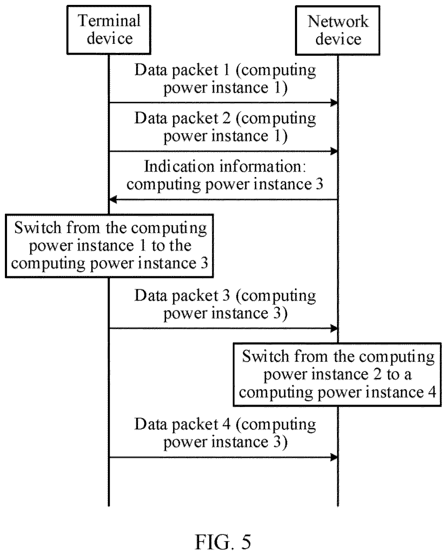

FIG. 5 is a diagram of a confusion between computing power instances according to an embodiment of this application. As shown in FIG. 5, a terminal device may use a computing power instance 1 and a computing power instance 3, and a network device may use a computing power instance 2 and a computing power instance 4. The computing power instance 1 and the computing power instance 2 may be a group of paired computing power instances, and have a correspondence. Output data of the computing power instance 1 needs to be used as input data of the computing power instance 2. The computing power instance 3 and the computing power instance 4 may be a group of paired computing power instances, and have a correspondence. Output data of the computing power instance 3 needs to be used as input data of the computing power instance 4.

It is assumed that at the beginning, the terminal device uses the computing power instance 1, the network device uses the computing power instance 2, and a data packet 1 and a data packet 2 are determined based on the computing power instance 1. After receiving the data packet 1 and the data packet 2, the network device may process the data packet 1 and the data packet 2 by using the computing power instance 2. Then, the terminal device may receive, from the network device, indication information indicating the computing power instance 3. After receiving the indication information, the terminal device may switch from the computing power instance 1 to the computing power instance 3. A subsequently sent data packet 3 may be determined based on the computing power instance 3. However, when the network device receives the data packet 3, the network device may not have switched from the computing power instance 2 to the computing power instance 4. Therefore, the computing power instance used by the network device is still the computing power instance 2, and the network device processes the data packet 3 by using the computing power instance 2. Consequently, a problem that the computing power instances do not correspond is caused.

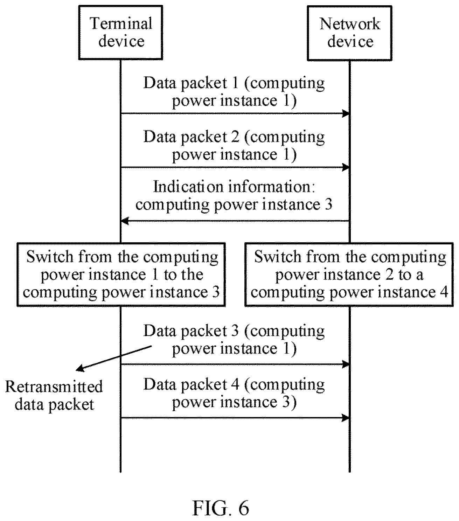

FIG. 6 is a diagram of another confusion between computing power instances according to an embodiment of this application. As shown in FIG. 6, time at which a terminal device switches from a computing power instance 1 to a computing power instance 3 is the same as time at which a terminal device switches from a computing power instance 2 to a computing power instance 4, that is, time at which the terminal device and the network device perform switching between the computing power instances are the same. However, after the terminal device and the network device switch the computing power instances, transmission of a data packet previously sent by the terminal device to the network device may fail due to reasons such as poor communication quality, and needs to be resent. Therefore, a data packet 3 sent by the terminal device to the network device may be a retransmitted data packet, and the data packet is determined based on the computing power instance 1. When the network device receives the data packet 3, because the network device has switched to the computing power instance 4, the network device processes the data packet 3 by using the computing power instance 4. Consequently, a problem that the computing power instances do not correspond is caused.

It should be understood that FIG. 5 and FIG. 6 are merely example descriptions of computing power instance confusion scenarios, and constitute no limitation thereto. For example, in FIG. 5, the network device may first switch from the computing power instance 2 to the computing power instance 4, and the terminal device may switch from the computing power instance 1 to the computing power instance 3 later than the network device.

It can be learned that, when the terminal device and the network device perform a coordination task, the problem that used computing power instances do not correspond (computing power instances are confused) may cause a case in which a processing result cannot be obtained or an obtained processing result is inaccurate. Consequently, a use effect of the computing power instance is affected.

It should be understood that a computing power instance on the terminal device and a computing power instance on the network device may be uniformly numbered, or may be independently numbered.

The foregoing application scenario is for uplink data. It should be understood that the foregoing application scenario is also applicable to downlink data.

To better understanding embodiments of this application, the following first describes some terms used in embodiments of this application.

A computing power instance is a mode or method used by a computing resource, for example, a size of a computing power, an AI model, a splitting point location of split learning or inference of the AI model, or a quantity of local iterations of federated learning, related to a computation amount.

The size of the computing power may be information such as usage time of a central processing unit (central processing unit, CPU) related to the computation amount.

The AI model may be a model like a neural network model, a decision tree model, a random forest model, a linear regression model, a logistic regression model, a support vector machine model, a naive Bayesian model, a k nearest neighbor (k nearest neighbor, KNN) model, a Markov model, or an expectation-maximization (expectation-maximization, EM) model that can process data.

An executor may also be referred to as a computing power executor, and is a running environment of a computing power instance, for example, a storage resource, power information, a memory resource, and a computing power that are needed by the computing power instance.

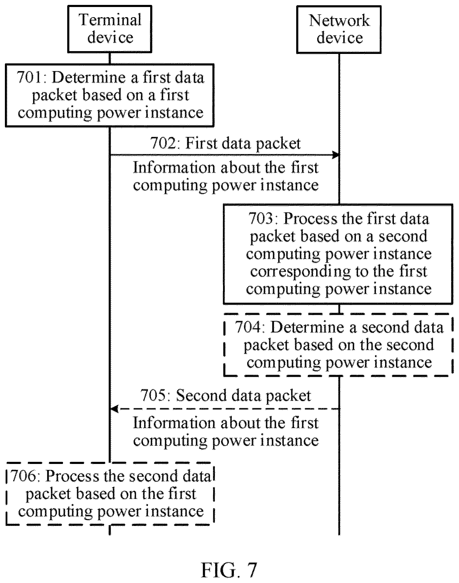

Based on the foregoing network architecture, FIG. 7 is a schematic flowchart of a communication method according to an embodiment of this application. As shown in FIG. 7, the communication method may include the following steps.

701: A terminal device determines a first data packet based on a first computing power instance.

When the terminal device has data to be sent to a network device, the terminal device may determine the first data packet based on the first computing power instance. The first computing power instance is a computing power instance currently being used by the terminal device, that is, a computing power instance currently in an active state in the terminal device, that is, a computing power instance currently being executed in the terminal device.

The terminal device may first process first data by using the first computing power instance, to obtain second data, and then may determine the first data packet based on the second data. The first data is any data in the data to be sent by the terminal device to the network device. The first data packet is any one of a plurality of data packets determined by the terminal device based on the second data.

Data amounts of different data packets in the plurality of data packets may be the same, may be different, or may be partially the same and partially different. For example, it is assumed that the terminal device determines 10 data packets based on the second data packet, data amounts of first nine data packets of the 10 data packets are the same, and a data amount of a last data packet is different from the data amounts of the first nine data packets.

The network device may send second configuration information to the terminal device. Correspondingly, the terminal device may receive the second configuration information from the network device. The second configuration information may include configuration information of N computing power instances. The N computing power instances may include the first computing power instance, that is, the first computing power instance may be one of the N computing power instances. N is an integer greater than or equal to 2.

In a case, the N computing power instances may be computing power instances configured by the network device to the terminal device, that is, computing power instances configured by the network device for the terminal device, that is, the N computing power instances are computing power instances configured by the network device and available to the terminal device.

In another case, the N computing power instances may be N computing power instances specified in a protocol, that is, information about the N computing power instances may be directly set or deployed in the terminal device. When the terminal device is connected to the network device, or when the terminal device needs the configuration information of the N computing power instances, the terminal device may report the information about the N computing power instances to the network device. Correspondingly, the network device receives the information about the N computing power instances from the terminal device, and then may determine the second configuration information based on the information about the N computing power instances.

The network device may determine the second configuration information based on a plurality of scheduling policies.

In a case, the network device may determine the second configuration information based on a usage status of resource information (including a computing power resource, a storage resource, and the like) of the network device.

In another case, the network device may determine the second configuration information based on an indication of another network device (for example, a core network device).

In still another case, the network device may determine the second configuration information based on the information reported by the terminal device.

An example in which the network device determines the second configuration information based on the information reported by the terminal device is used below for description.

In an implementation, the terminal device may send second indication information to the network device. The second indication information indicates a computing power status of the terminal device. The network device may determine the second configuration information based on the computing power status of the terminal device.

The terminal device may send the second indication information to the network device when the terminal device is connected to the network device, or may send the second indication information to the network device when the computing power status of the terminal device changes.

The computing power status of the terminal device may include one or more of central processing unit (central processing unit, CPU) type information, storage information, memory information, power information, computing power utilization information, and the like of the terminal device.

The CPU type information of the terminal device may be information about a CPU type of the terminal device. The CPU type of the terminal device may be a CPU, may be an image processing unit (graphics processing unit, GPU), may be a neural-network processing unit (neural-network processing unit, NPU), may be a field programmable gate array (field programmable gate array, FPGA), or may be another CPU type. This is not limited herein.

The storage information of the terminal device may be information about a storage size of the terminal device. The storage size may be a total storage size, may be an idle storage size, or may be an occupied storage size. The storage size herein is a storage size of a storage resource with a large storage resource and a low storage speed, for example, a hard disk.

The memory information of the terminal device may be information about a memory of the terminal device. The memory of the terminal device may be a total memory of the terminal device, may be an idle memory of the terminal device, may be a memory usage rate of the terminal device, may be an occupied memory of the terminal device, may be a total memory and an idle memory of the terminal device, or may be a total memory and an occupied memory. This is not limited herein.

The power information of the terminal device is information about a power of the terminal device. The power of the terminal device may be a remaining power of the terminal device, may be a total power and the remaining power of the terminal device, may be a proportion of the remaining power of the terminal device to the total power, or may be other information related to the power of the terminal device. This is not limited herein.

The computing power utilization information of the terminal device may be information about an occupation status of a computing power resource of the terminal device, may be information about an occupation proportion of the computing power resource of the terminal device, or may be other information related to the computing power resource of the terminal device.

In another implementation, the terminal device may send third indication information to the network device. The third indication information indicates a computing power resource and/or a computing power instance expected by the terminal device. The network device may determine the second configuration information based on the computing power resource and/or the computing power instance expected by the terminal device.

It can be learned that the network device may configure the second configuration information for the terminal device when the terminal device is connected to the network device; may configure the second configuration information for the terminal device when the computing power status of the terminal device changes; or may configure the second configuration information for the terminal device when receiving the indication of the another network device.

The configuration information of the computing power instance may include information such as an identifier of the computing power instance and information needed by the computing power instance.

The identifier of the computing power instance may be a task identifier of the computing power instance, may be an index of the computing power instance, or may be other information that may uniquely identify the computing power instance.

The identifier of the computing power instance may be allocated by a CMF network element, may be allocated by a task anchor (task anchor, TA), may be allocated by task scheduling (task scheduling, TS), may be allocated by convergence scheduling (convergence scheduling, CS), or may be allocated by the network device.

The task identifier of the computing power instance may be an identifier of a task of the computing power instance. The task of the computing power instance is a computing task that needs to be jointly completed by the terminal device and the network device, that is, a coordination task. The task of the computing power instance may include an AI inference task, an AI training task, a computing task, a perception task, and the like.

The index of the computing power instance may be an index of the computing power instance in all computing power instances. All the computing power instances may include the N computing power instances and computing power instances that are to be used by the network device and that correspond to the N computing power instances, or may include all computing power instances that can be obtained by the network device. When all the computing power instances include only the N computing power instances and the computing power instances that are to be used by the network device and that correspond to the N computing power instances, if N is 16, there are a total of 32 computing power instances, and an index of one computing power instance needs to be represented by using 5 bits. Alternatively, if N is 20, there are a total of 40 computing power instances, and an index of one computing power instance needs to be represented by using 6 bits.

The index of the computing power instance may alternatively be an index of the computing power instance in the N computing power instances. When N is 16, an index of one computing power instance needs to be represented by using only 4 bits. When N is 20, an index of one computing power instance needs to be represented by using only 5 bits.

It can be learned that a quantity of bits needed by the index of the computing power instance that is the index of the computing power instance in the N computing power instances is less than a quantity of bits needed by the index of the computing power instance that is the index of the computing power instance in all the computing power instances. In the case of the quantity of bits needed by the index of the computing power instance that is the index of the computing power instance in the N computing power instances, a data amount of the second configuration information is small, and a quantity of transmission resources that are needed is also small, so that resources needed for transmission can be reduced, thereby saving transmission resources.

The network device rather than the terminal device may determine which computing power instance in the N computing power instances is specifically used by the terminal device. Data processing may be completed by the network device and the terminal device together (that is, cooperatively). After the network device determines service data whose transmission is to be performed with the terminal device, the network device may determine, based on information such as a service type of the data whose transmission needs to be performed between the terminal device and the network device, a location of the terminal device, and a service scenario, a second computing power instance to be used by the network device. Then, the network device may determine, based on the second computing power instance, the first computing power instance to be used by the terminal device, that is, determine the first computing power instance corresponding to the second computing power instance, and determine the first computing power instance as the computing power instance to be used by the terminal device. The first computing power instance and the second computing power instance may each correspond to a complete AI model, or may respectively correspond to two parts of an AI model. The two parts may form a complete AI model, or may be a part of the complete AI model.

For example, the first computing power instance may correspond to first several layers of networks in an AI model, and the second computing power instance may correspond to last several layers of networks in the AI model.

For another example, the first computing power instance may correspond to a first AI model, and the second computing power instance may correspond to a second AI model. The first AI model and the second AI model are AI models for collaborative processing, that is, the second AI model is an AI model corresponding to the first AI model.

After determining the first computing power instance to be used by the terminal device, the network device may send first indication information to the terminal device. Correspondingly, the terminal device may receive the first indication information. The first indication information indicates the first computing power instance.

After receiving the first indication information, the terminal device may activate, enable, use, or execute the first computing power instance based on the first indication information.

The AI model corresponding to the first computing power instance may be an AI model obtained through collaborative computing by the network device and one or more terminal devices, so that when the terminal device may execute the first computing power instance based on the first indication information sent by the network device, the terminal device can share a computing resource of the network device, to resolve a problem that computing resources of the terminal device are insufficient. Correspondingly, the network device also needs to perform, based on, a computation process of an AI model corresponding to the second computing power instance.

The first indication information may include an identifier of the first computing power instance. When an executor is in one-to-one correspondence with a computing power instance, the first indication information may alternatively include an identifier of an executor corresponding to the first computing power instance. The first indication information may alternatively include an identifier of the first computing power instance and an identifier of an executor corresponding to the first computing power instance.

Before the terminal device receives the first indication information, if there is a computing power instance being used on the terminal device, the terminal device may first determine whether the computing power instance being used on the terminal device is the first computing power instance. When it is determined that the computing power instance being used on the terminal device is the first computing power instance, using the first computing power instance may be understood as continuing to use the computing power instance being used on the terminal device without a need to perform switching. When it is determined that the computing power instance being used on the terminal device is not the first computing power instance, using the first computing power instance may be understood as that the terminal device switches a used computing power instance from a previously used computing power instance to the first computing power instance. Specifically, the terminal device may first deactivate the previously used computing power instance, and then may activate the first computing power instance.

Before the terminal device receives the first indication information, if there is no computing power instance being used on the terminal device, the terminal device may directly activate, enable, or use the first computing power instance based on the first indication information.

The determining process may alternatively be performed by the network device. Specifically, after determining the first computing power instance to be used by the terminal device, the network device may first determine whether a computing power instance being used on the terminal device is the first computing power instance. When determining that the computing power instance being used on the terminal device is the first computing power instance, the network device may not send the first indication information to the terminal device. When determining that the computing power instance being used on the terminal device is not the first computing power instance, the network device may send the first indication information to the terminal device.

In a case, the network device may first determine a computing power instance being used by the network device, and then may determine a computing power instance corresponding to the computing power instance, so as to obtain the computing power instance being used on the terminal device.

In another case, the network device may determine a computing power instance indicated by indication information whose time is closest to current time, to obtain the computing power instance being used on the terminal device.

The terminal device may activate, enable, use, or execute the first computing power instance based on the configuration information of the first computing power instance in the second configuration information.

The network device may send the first indication information to the terminal device by using layer 1 (layer 1, L1) signaling or a layer 1 message, may send the first indication information to the terminal device by using layer 2 (layer 2, L2) signaling or a layer 2 message, may send the first indication information to the terminal device by using layer 3 (layer 3, L3) signaling or a layer 3 message, or may send the first indication information to the terminal device by using higher layer signaling or a higher layer message. The higher layer signaling or the higher layer message may be media access control (media access control, MAC) layer signaling or a media access control layer message, may be radio link control (radio link control, RLC) layer signaling or a radio link control layer message, or may be other higher layer signaling or another higher layer message.

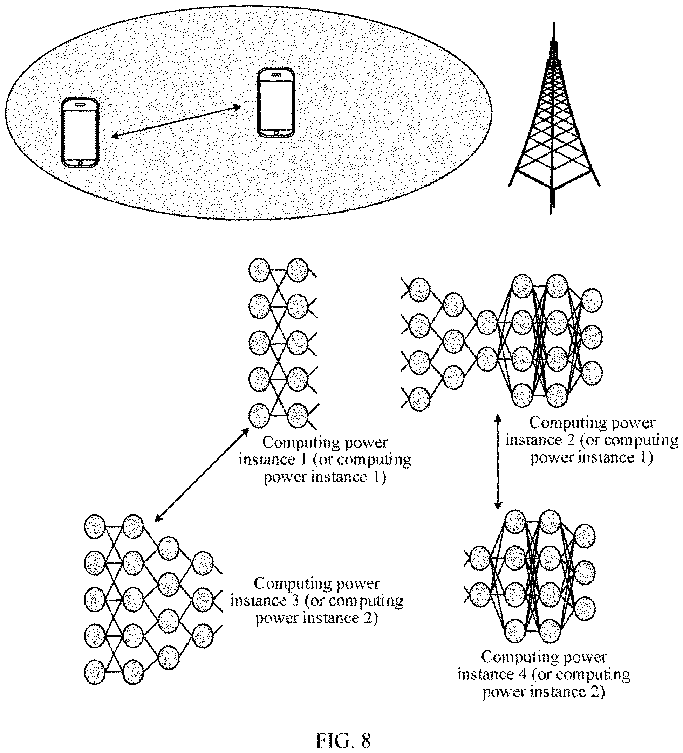

For example, FIG. 8 is a diagram of switching between computing power instances according to this application. As shown in FIG. 8, when a terminal device is located at a central location of a coverage area of a network device, that is, when a distance from the network device is less than or equal to (or less than) a first threshold, a channel capacity of the terminal device is large, channel quality of the terminal device is good, transmission bandwidth is large, transmission of a large amount of information needs to be performed between the terminal device and the network device, and a small quantity of resources can be used by the terminal device for computing. Therefore, the terminal device may perform little data processing. When the terminal device is located at an edge location of the coverage area of the network device, that is, when a distance from the network device is greater than (or not less than) the first threshold, the channel capacity of the terminal device is small, the channel quality of the terminal device is poor, the transmission bandwidth is small, transmission of a small amount of information needs to be performed between the terminal device and the network device, and a large quantity of resources can be used by the terminal device for computing. Therefore, the terminal device may perform much data processing.

An example in which the AI model is a neural network model is used below for description. The terminal device located at the central location of the coverage area of the network device may perform less data processing. Therefore, the terminal device may perform computation of fewer layers (for example, two layers) of a neural network, and hand over an output result and computation of remaining layers to the network device for computing. The terminal device located at the edge location of the coverage area of the network device may perform much data processing. Therefore, the terminal device may perform computation of more layers (for example, four layers) of the neural network, and hand over an output result and computation of remaining layers to the access network device for computing. It can be learned that, when the terminal device moves from the central location to the edge location in a moving process, the network device may send first indication information to the terminal device. The first indication information may indicate a computing power instance 3. The terminal device may switch from a computing power instance 1 to the computing power instance 3 based on the first indication information. The network device may switch from a computing power instance 2 to a computing power instance 4. The computing power instance 1 is a computing power instance corresponding to the computing power instance 2, and the computing power instance 3 is a computing power instance corresponding to the computing power instance 4. Correspondingly, when the terminal device moves from the edge location to the central location in the moving process, the network device may send first indication information to the terminal device. The first indication information may indicate the computing power instance 1. The terminal device may switch from the computing power instance 3 to the computing power instance 1 based on the first indication information. The network device may switch from the computing power instance 4 to the computing power instance 2.

It should be understood that, the foregoing example descriptions are merely example descriptions of switching between the computing power instances, and constitute no limitation thereto. An actual splitting point location of the AI model is related to a computation amount, a communication volume, and the like. For example, when the AI model is a convolutional neural network (convolutional neutral networks, CNN) model, anterior neural network layers have a large quantity of parameters, corresponding communication demands are large, and computation amounts are small; and posterior neural network layers have a small quantity of parameters, corresponding communication demands are small, and computation amounts are large. For another example, when the AI model is a deconvolutional model, anterior neural network layers have a small quantity of parameters, corresponding communication demands are small, and computation amounts are small; and posterior neural network layers have a large quantity of parameters, corresponding communication demands are large, and computation amounts are large.

It should be understood that a computing power instance on the terminal device and a computing power instance on the network device may be uniformly numbered, or may be independently numbered.

For example, a number of a computing power instance in brackets in FIG. 8 is a number independently numbered by the terminal device and the network device. In this case, the computing power instance 1 in the terminal device corresponds to the computing power instance 1 in the network device, and the computing power instance 2 in the terminal device corresponds to the computing power instance 2 in the network device.

In a case, the terminal device does not need to maintain a correspondence between the computing power instance in the terminal device and the computing power instance in the network device. The network device needs to maintain the correspondence between the computing power instance in the terminal device and the computing power instance in the network device.

In another case, both the terminal device and the network device need to maintain the correspondence between the computing power instance in the terminal device and the computing power instance in the network device.

The network device may further configure M executors for the terminal device. The M executors correspond to the N computing power instances. M is an integer less than or equal to N.

In a case, the M executors are in one-to-one correspondence with the N computing power instances. In this case, M is equal to N. The M executors and the N computing power instances may be shown in Table 1.

**Table 1**

| Information about an executor | Information about a computing power instance |
|---|---|
| Executor 1 | Computing power instance 1 |
| Executor 2 | Computing power instance 2 |
| Executor 3 | Computing power instance 3 |
| ... | ... |

In another case, one of the M executors corresponds to a plurality of computing power instances in the N computing power instances, that is, executors and computing power instances are in a one-to-many relationship, but one computing power instance corresponds to only one executor. The M executors and the N computing power instances may alternatively be shown in Table 2.

**Table 2**

| Information about an executor | Information about a computing power instance |
|---|---|
| Executor 1 | Computing power instance 1 |
| | Computing power instance 2 |
| Executor 2 | Computing power instance 3 |
| | Computing power instance 4 |
| | Computing power instance 5 |
| ... | ... |

In still another case, some of the M executors are in one-to-one correspondence with some of the N computing power instances, and one of the remaining executors in the M executors corresponds to a plurality of computing power instances in the remaining computing power instances in the N computing power instances, but one computing power instance corresponds to only one executor. The M executors and the N computing power instances may alternatively be shown in Table 3.

**Table 3**

| Information about an executor | Information about a computing power instance |
|---|---|
| Executor 1 | Computing power instance 1 |
| Executor 2 | Computing power instance 2 |
| Executor 3 | Computing power instance 3 |
| | Computing power instance 4 |
| | Computing power instance 5 |
| ... | ... |

It should be understood that Table 1 to Table 3 are example descriptions of the correspondence between the M executors and the N computing power instances, and do not limit the correspondence between the M executors and the N computing power instances.

It can be learned that the executors and the computing power instances may be in a one-to-one correspondence, may be in a one-to-many relationship, or may be in a one-to-one or a one-to-many relationship. Therefore, when the computing power instance and the executor are configured, configuration flexibility of the network device can be improved.

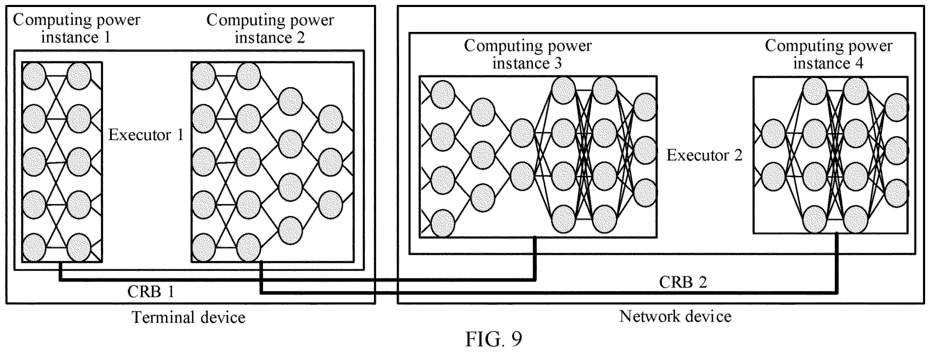

FIG. 9 is a diagram of a correspondence between an executor and a computing power instance according to an embodiment of this application. As shown in FIG. 9, one executor corresponds to two computing power instances. An executor 1 in a terminal device corresponds to a computing power instance 1 and a computing power instance 2, and an executor 2 in a network device corresponds to a computing power instance 3 and a computing power instance 4. The computing power instance 1 in the terminal device corresponds to the computing power instance 3 in the network device, and the computing power instance 2 in the terminal device corresponds to the computing power instance 4 in the network device. The computing power instance 1 corresponds to a CRB 1, and the computing power instance 2 corresponds to a CRB 2. When the terminal device switches from the computing power instance 1 (or 2) to the computing power instance 2 (or 1), the network device switches from the computing power instance 3 (or 4) to the computing power instance 4 (or 3). It can be learned that when two computing power instances correspond to a same executor, when switching is performed between the two computing power instances, the executor does not need to be switched.

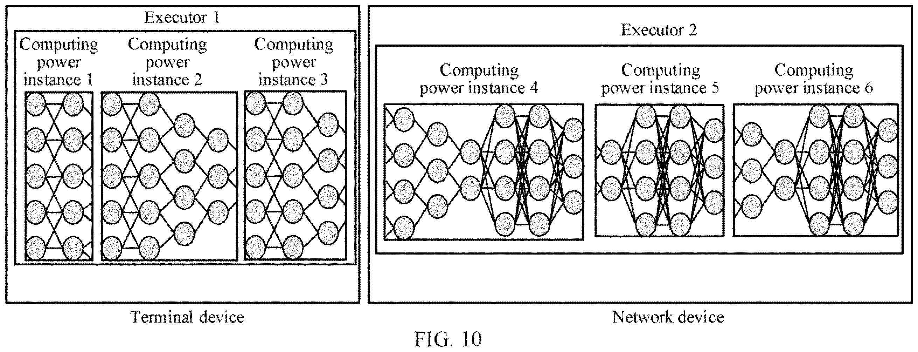

FIG. 10 is a diagram of another correspondence between an executor and a computing power instance according to an embodiment of this application. As shown in FIG. 10, one executor corresponds to three computing power instances. An executor 1 in a terminal device corresponds to a computing power instance 1, a computing power instance 2, and a computing power instance 3, and an executor 2 in a network device corresponds to a computing power instance 4, a computing power instance 5, and a computing power instance 6. The computing power instance 1 in the terminal device corresponds to the computing power instance 4 in the network device, the computing power instance 2 in the terminal device corresponds to the computing power instance 5 in the network device, and the computing power instance 3 in the terminal device corresponds to the computing power instance 6 in the network device. When the terminal device switches from the computing power instance 1 to the computing power instance 2, the network device switches from the computing power instance 4 to the computing power instance 5. It can be learned that when three computing power instances correspond to a same executor, when switching is performed between two of the three computing power instances, the executor does not need to be switched.

It can be learned that when one executor corresponds to a plurality of computing power instances, because the terminal device may execute a plurality of different computing power instances in one executor, the terminal device does not need to determine (or reconfigure, prepare, activate, or the like) a new executor in a computing power instance switching process, that is, does not need to reconfigure a computing power environment, so that the terminal device can quickly perform switching between a plurality of different computing power instances in one executor, that is, only needs to switch a working model. In this way, a switching speed of a computing power instance can be improved.

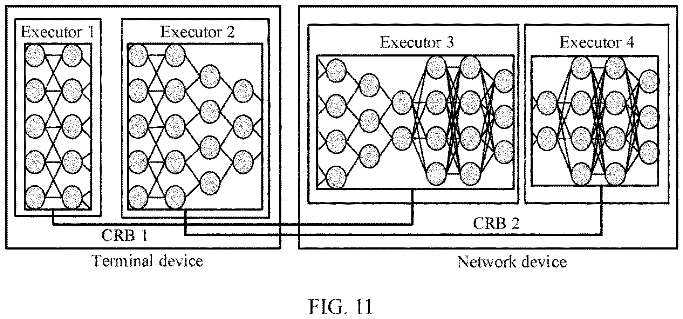

FIG. 11 is a diagram of still another correspondence between an executor and a computing power instance according to an embodiment of this application. As shown in FIG. 11, one executor corresponds to one computing power instance. An executor 1 corresponds to a computing power instance 1, an executor 2 corresponds to a computing power instance 2, an executor 3 corresponds to a computing power instance 3, an executor 4 corresponds to a computing power instance 4, the computing power instance 1 corresponds to the computing power instance 3, and the computing power instance 2 corresponds to the computing power instance 4. The computing power instance 1 corresponds to a CRB 1, and the computing power instance 2 corresponds to a CRB 2. When a terminal device switches from the computing power instance 1 (or 2) to the computing power instance 2 (or 1), an executor of the terminal device is switched from the executor 1 (or 2) to the executor 2 (or 1), a network device switches from the computing power instance 3 (or 4) to the computing power instance 4 (or 3), and an executor of the network device is switched from the executor 3 (or 4) to the executor 4 (or 3).

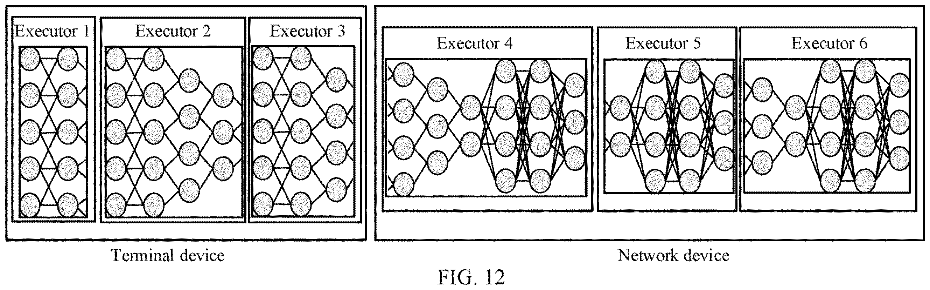

FIG. 12 is a diagram of still another correspondence between an executor and a computing power instance according to an embodiment of this application. As shown in FIG. 12, one executor corresponds to one computing power instance. An executor 1 corresponds to a computing power instance 1, an executor 2 corresponds to a computing power instance 2, an executor 3 corresponds to a computing power instance 3, an executor 4 corresponds to a computing power instance 4, an executor 5 corresponds to a computing power instance 5, an executor 6 corresponds to a computing power instance 6, the computing power instance 1 corresponds to the computing power instance 4, the computing power instance 2 corresponds to the computing power instance 5, and the computing power instance 3 corresponds to the computing power instance 6. When a terminal device switches from the computing power instance 1 to the computing power instance 2, an executor of the terminal device is switched from the executor 1 to the executor 2, a network device switches from the computing power instance 4 to the computing power instance 5, and an executor of the network device is switched from the executor 4 to the executor 5.

It can be learned that when two computing power instances respectively correspond to two executors, when switching is performed between the two computing power instances, switching between the corresponding executors also need to be performed, and long switching time is needed.

It should be understood that FIG. 9 to FIG. 12 are example descriptions of the correspondence between the executor and the computing power instance, and do not constitute a limitation on the correspondence between the executor and the computing power instance.

It should be understood that an executor on the terminal device and an executor on the network device may be uniformly numbered, or may be independently numbered.

In a case, the terminal device does not need to maintain a correspondence between the executor on the terminal device and the executor on the network device. The network device needs to maintain the correspondence between the executor on the terminal device and the executor on the network device.

In another case, both the terminal device and the network device need to maintain the correspondence between the executor on the terminal device and the executor on the network device.

A computing power resource of an executor is greater than or equal to a maximum computing power resource needed by one or more computing power instances corresponding to the executor.

In a case, when the terminal device is connected to the network device, the network device may send third configuration information to the terminal device. Correspondingly, the terminal device may receive the third configuration information from the network device. The third configuration information may include configuration information of the M executors.

The network device may send the second configuration information and the third configuration information together to the terminal device, that is, may send the second configuration information and the third configuration information to the terminal device by using a same message or same signaling. Alternatively, the network device may separately send the second configuration information and the third configuration information to the terminal device, that is, the network device may separately send the second configuration information and the third configuration information to the terminal device by using two messages or two pieces of signaling.

In another case, the second configuration information may alternatively include configuration information of the M executors.

Configuration information of an executor may include an identifier and a computing power resource that are of the executor. The computing power resource of the executor may include one or more of CPU type information, storage information, memory information, power information, and the like of the executor.

The CPU type information of the executor may be information about a CPU type needed by the executor.

The storage information of the executor may be a storage size needed by the executor.

The memory information of the executor may be information about a memory needed by the executor. The memory needed by the executor may be an idle memory needed by the executor.

The power information of the executor may be information about a power needed by the executor. The power needed by the executor may be a minimum power needed by the executor, or may be a power that needs to be consumed for execution, or may be another power needed by the executor. This is not limited herein.

The terminal device may determine the first data packet in an executor corresponding to the first computing power instance based on the first computing power instance.

When a computing power status of the terminal device includes the power information, if a computing power resource corresponding to the first computing power instance includes a power, the power indicates that the first computing power instance may be executed only when a power of the terminal device is greater than or equal to (or greater than) a second threshold. For example, the computing power resource corresponding to the first computing power instance includes a power, indicating that the first computing power instance may be executed only when a power of an electronic device is greater than or equal to 50%, 40%, 30%, 20%, or another value. In this case, after receiving the first indication information, the terminal device may first determine whether a current power of the terminal device meets an execution power of the first computing power instance, that is, determine whether the current power of the terminal device is greater than or equal to the second threshold. When determining that the current power of the terminal device meets the execution power of the first computing power instance, the terminal device executes the first computing power instance. When determining that the current power of the terminal device does not meet the execution power of the first computing power instance, the terminal device may send, to the network device, indication information indicating that the current power of the terminal device does not meet the execution power of the first computing power instance.

702: The terminal device sends, to the network device, the first data packet that includes information about the first computing power instance.

Correspondingly, the network device receives, from the terminal device, the first data packet that includes the information about the first computing power instance.

After determining the first data packet based on the first computing power instance, the terminal device may send the first data packet to the network device. Correspondingly, the network device may receive the first data packet from the terminal device. The first data packet may include or carry the information about the first computing power instance, indicating that the first data packet is determined based on the first computing power instance.

The first data packet may include or carry the information about the first computing power instance in one or more of the following three cases.

In a case, the first data packet may be carried in an LCH or a CRB corresponding to the first computing power instance.

In an implementation, the network device may send first configuration information to the terminal device. The first configuration information may include N computing power instances and N LCHs or N CRBs. The N computing power instances are in one-to-one correspondence with the N LCHs or the N CRBs. It can be learned that one computing power instance may correspond to one unique LCH or CRB. Therefore, the terminal device may send the first data packet to the network device by using the LCH or the CRB that carries the first data packet. In this way, that the first data packet is determined based on the first computing power instance may be indicated by using the LCH or the CRB, and dedicated indication information is not needed for the indication. This can reduce a data amount of information whose transmission needs to be performed, and save transmission resources.

The first configuration information may include an identifier of a computing power instance and an identifier of an LCH or a CRB. In a case, pseudocode of the first configuration information may be as follows:

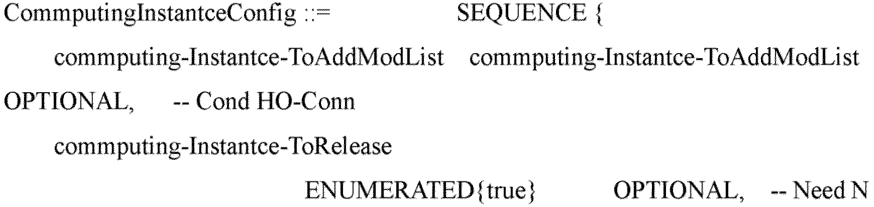

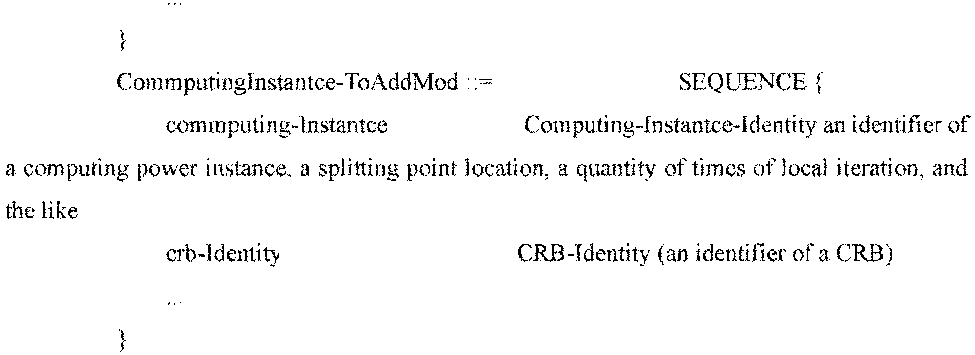

The pseudocode is used to configure a computing power instance and a CRB.

It should be understood that crb-Identity in the pseudocode of the first configuration information may be replaced with lch-Identity, and CRB-Identity may be replaced with LCH-Identity, which is used to configure the computing power instance and the LCH.

In a case, when the N computing power instances are in one-to-one correspondence with the N LCHs, configuration information carried by RLC may include an identifier of an LCH and an identifier of an associated computing power instance, and pseudocode of the configuration information carried by the RLC may be as follows:

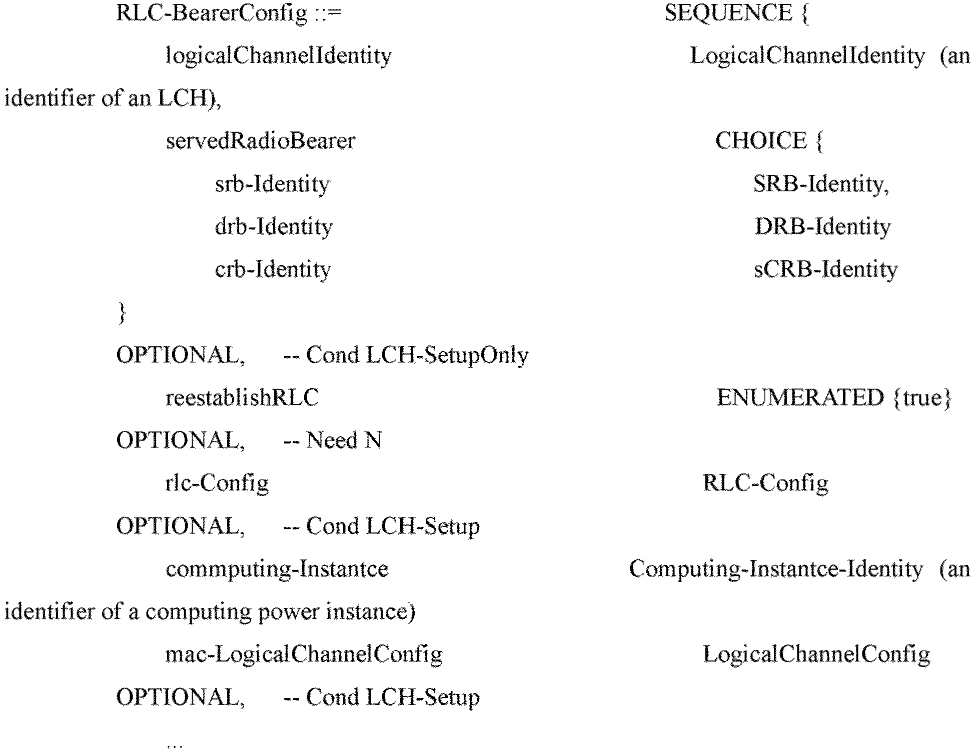

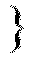

In another case, when the N computing power instances are in one-to-one correspondence with the N LCHs, configuration information of an LCH may include an identifier of a computing power instance associated with the LCH, and pseudocode of the configuration information of the LCH may be as follows:

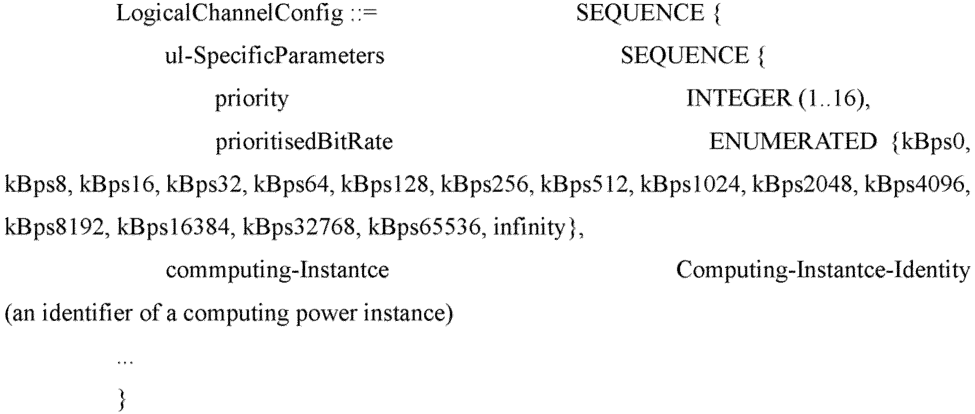

When the N computing power instances are in one-to-one correspondence with the N CRBs, configuration information of a CRB may include an identifier of a computing power instance associated with the CRB, and pseudocode of the configuration information of the CRB may be as follows:

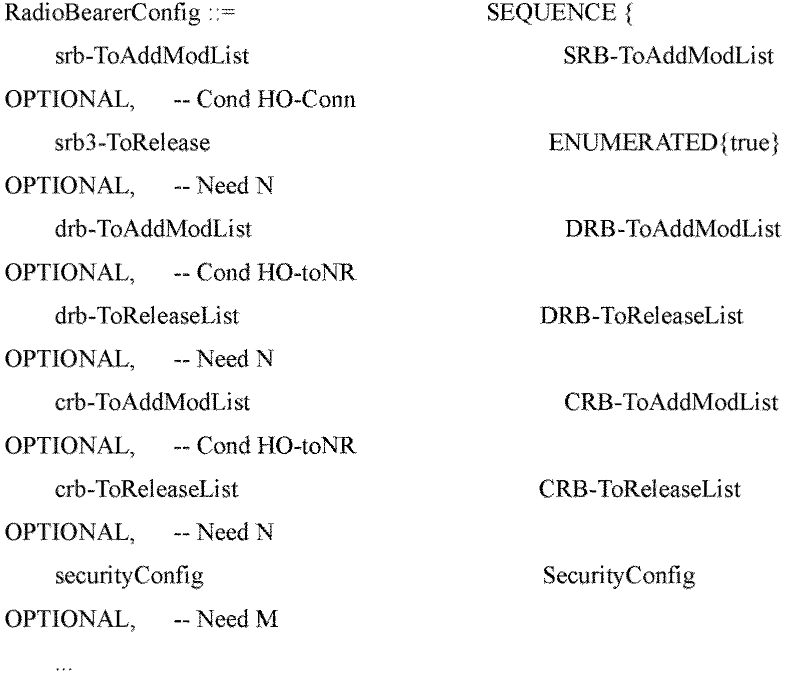

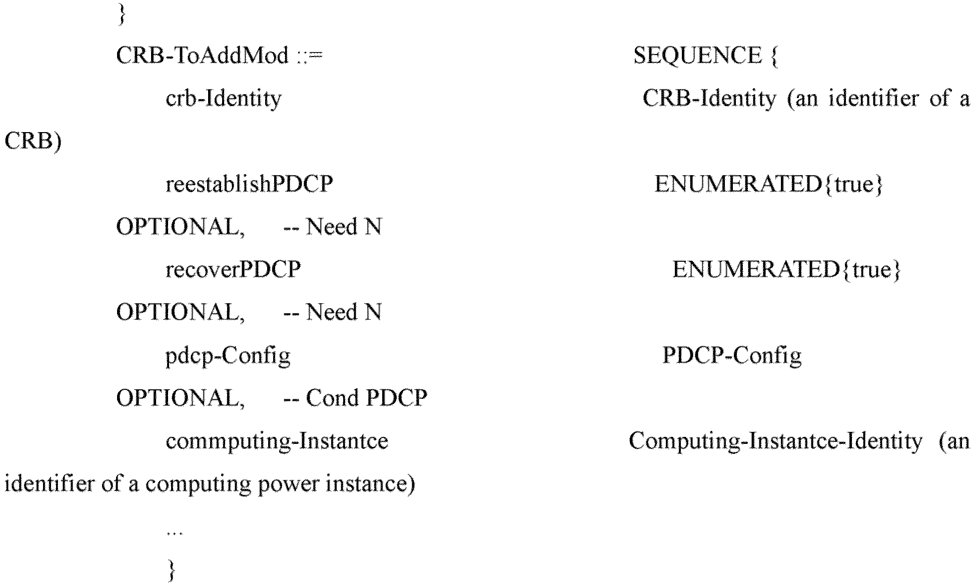

When the network device configures both the first configuration information and the second configuration information for the terminal device, the first configuration information and the second configuration information are different configuration information configured by the network device for the terminal device. The first configuration information includes N computing power instances. This may be understood as that the first configuration information includes information about the N computing power instances, for example, identifiers of the N computing power instances. When the network device configures only the first configuration information for the terminal device without configuring the second configuration information, the first configuration information includes the N computing power instances. This may be understood as that the first configuration information includes configuration information of the N computing power instances. For detailed information, refer to the related descriptions of the second configuration information.

In another implementation, the second configuration information may alternatively include N computing power instance and N LCHs or N CRBs. The N computing power instances are in one-to-one correspondence with the N LCHs or the N CRBs.

In still another implementation, the protocol may specify that the N computing power instances are in one-to-one correspondence with the N LCHs or the N CRBs. In this case, the network device does not need to configure, for the terminal device, that the N computing power instances are in one-to-one correspondence with the N LCHs or the N CRBs.

A correspondence between the N computing power instances and the N LCHs or the N CRBs may be shown in Table 4 or Table 5.

**Table 4**

| Information about a computing power instance | Information about an LCH or a CRB |
|---|---|
| Computing power instance 1 | LCH N or CRB N |
| Computing power instance 2 | LCH N-1 or CRB N-1 |
| Computing power instance 3 | LCH N-2 or CRB N-2 |
| ... | ... |

**Table 5**

| Information about a computing power instance | Information about an LCH or a CRB |
|---|---|
| Computing power instance 1 | LCH 1 or CRB 1 |
| Computing power instance 2 | LCH 2 or CRB 2 |
| Computing power instance 3 | LCH 3 or CRB 3 |
| ... | ... |

It should be understood that Table 4 and Table 5 are example descriptions of the correspondences between the N computing power instances and the N LCHs or the N CRBs, and do not limit the correspondences between the N computing power instances and the N LCHs or the N CRBs.

Therefore, when the terminal device determines data packets by using different computing power instances, LCHs or CRBs that carry sent data packets may be different. For example, when a computing power instance used by the terminal device to determine a data packet is the computing power instance 1, the data packet may be carried in an LCH 1 or a CRB 1. Alternatively, when a computing power instance used by the terminal device to determine a data packet is the computing power instance 2, the data packet may be carried in an LCH 2 or a CRB 2.

Therefore, the network device may determine the first computing power instance based on the LCH or the CRB that carries the first data packet.

In another case, the information about the first computing power instance may include an identifier of the first computing power instance. The first data packet may be a MAC layer data packet, may be a PDCP layer data packet, or may be another layer data packet. When the first data packet is the MAC layer data packet, the first data packet may include a MAC header, and the MAC header may include the identifier of the first computing power instance. When the first data packet is the PDCP layer data packet, the first data packet may include a PDCP header, and the PDCP header may include the identifier of the first computing power instance. For detailed descriptions of the identifier of the computing power instance, refer to the related descriptions in step 701.

The network device may determine the first computing power instance based on the identifier of the first computing power instance.

In still another case, the information about the first computing power instance may include an SN and a status indication that are of the first data packet. The status indication indicates whether the first data packet is a last data packet determined based on the first computing power instance.

The terminal device may determine a plurality of data packets based on the second data. To determine a sequence of the plurality of data packets after the network device receives the plurality of data packets, the plurality of data packets determined by the terminal device may include SNs of data packets, indicating a sequence or sequence numbers of the data packets in the plurality of data packets.

In addition, each of the plurality of data packets may further include a status indication. The status indication may be 1 bit.

For example, when the first data packet is the last data packet determined based on the first computing power instance, the status indication may be "1". When the first data packet is not the last data packet determined based on the first computing power instance, the status indication may be "0".

For another example, when the first data packet is the last data packet determined based on the first computing power instance, the status indication may be "0". When the first data packet is not the last data packet determined based on the first computing power instance, the status indication may be "1".

The status indication may alternatively be a plurality of bits.

For example, it is assumed that the status indication is 2 bits. When the first data packet is the last data packet determined based on the first computing power instance, the status indication may be "11". When the first data packet is not the last data packet determined based on the first computing power instance, the status indication may be "00". The reverse is also true.

For example, it is assumed that the status indication is 3 bits. When the first data packet is the last data packet determined based on the first computing power instance, the status indication may be "111". When the first data packet is not the last data packet determined based on the first computing power instance, the status indication may be "000". The reverse is also true.

When the network device does not send fourth indication information to the terminal device, the status indication in the first data packet indicates that the first data packet is not the last data packet determined based on the first computing power instance. The fourth indication information indicates a third computing power instance.

When the network device sends the fourth indication information to the terminal device, if the first data packet is the last data packet determined based on the first computing power instance, the status indication indicates that the first data packet is the last data packet determined based on the first computing power instance. If the first data packet is not the last data packet determined based on the first computing power instance, the status indication indicates that the first data packet is not the last data packet determined based on the first computing power instance.

The network device may determine the first computing power instance based on the SN and the status indication that are of the first data packet. When the network device sends the first indication information to the terminal device before sending the fourth indication information to the terminal device, if the status indication indicates that the first data packet is the last data packet determined based on the first computing power instance, the status indication is "1". Therefore, the network device may determine, based on the value "1" of the status indication, that the first data packet is the last data packet determined based on the first computing power instance. In addition, the network device may further determine that a data packet whose SN is after the SN of the first data packet is determined based on the third computing power instance.

The SNs of the data packets may be sorted in descending order, or may be sorted in ascending order.

For example, it is assumed that the SNs of the data packets are sorted in ascending order, the SN of the first data packet is 10, and the status indication is "1". Before next switching, a data packet whose SN is greater than 10 is determined based on the third computing power instance.

In a case, a quantity of bits occupied by an SN of a data packet is fixed.

For example, the quantity of bits occupied by the SN of the data packet may be fixed to 8 bits, and a total of 256 data packets may be represented.

In another case, a quantity of bits occupied by an SN of a data packet is determined based on a quantity of data packets.

For example, when a quantity of data packets determined based on the second data packet is 16, the SN of the data packet may be represented by using 4 bits.

For another example, when a quantity of data packets determined based on the second data packet is 20, the SN of the data packet may be represented by using 5 bits.

In a data packet transmission process, due to reasons such as a latency and data packet retransmission, a data packet that is first received by the network device is not a data packet whose SN is on the top. Therefore, a sequence of a data packet cannot be determined based on time at which the network device receives the data packet, but needs to be determined based on an SN of the data packet.

In addition, the terminal device may alternatively indicate, to the network device in another case, the first computing power instance used by the terminal device to determine the first data packet.

In a case, the terminal device may send fifth indication information to the network device. The fifth indication information indicates last data processed based on the first computing power instance. The first data packet may include information about the first data.

For example, when the first data is the last data processed by the terminal device based on the first computing power instance, the terminal device may send the fifth indication information to the network device. The fifth indication information indicates the first data. The fifth indication information may include an identifier of the first data, may include a service identifier of the first data, or may include other information that may uniquely identify the first data.

The fifth indication information may be sent to the network device together with a data packet determined based on third data. In this case, the terminal device does not need to additionally request a transmission resource from the network device. The third data is last data processed by the terminal device by using the first computing power instance.

Alternatively, the fifth indication information and a data packet determined based on third data may be separately sent to the network device.

In an implementation, a transmission resource used by the terminal device to send the fifth indication information may be pre-scheduled by the network device to the terminal device.

In another implementation, a transmission resource used by the terminal device to send the fifth indication information may alternatively be a grant-free resource.

In still another implementation, when the network device needs the terminal device to switch from the first computing power instance to the third computing power instance, the network device may send the fourth indication information to the terminal device. The fourth indication information indicates the third computing power instance. Alternatively, the transmission resource used by the terminal device to send the fifth indication information may be configured by the network device for the terminal device when the network device determines that the terminal device switches from the first computing power instance to the third computing power instance. The network device may send the transmission resource for the fifth indication information and the fourth indication information to the terminal device together, or may separately send the transmission resource for the fifth indication information and the fourth indication information to the terminal device.

The foregoing descriptions are merely example descriptions of the fifth indication information, and do not limit a specific meaning of the fifth indication information, provided that the fifth indication can indicate that the terminal device does not use the first computing power instance subsequently, and the network device may determine, based on the fifth indication information, the data packet determined by the terminal device based on the first computing power instance.

The fifth indication information may alternatively indicate the last data packet determined based on the first computing power instances. For example, the fifth indication information may include an identifier of the last data packet determined by the terminal device based on the first computing power instance. The identifier of the data packet may be an SN of the data packet, or may be other information that may uniquely identify the data packet.

In another case, when the network device determines that the terminal device needs to switch from the first computing power instance to the third computing power instance, the network device may send sixth indication information to the terminal device. The sixth indication information may indicate the terminal device to report the last data packet or data determined based on the first computing power instance. The network device may send the sixth indication information and the fifth indication information to the terminal device together, or may separately send the sixth indication information and the fifth indication information to the terminal device.

After receiving the sixth indication information, the terminal device may report, to the terminal device based on the sixth indication information, the last data packet or data determined based on the first computing power instance. The terminal device may send, to the network device, information about the last data packet or data determined based on the first computing power instance. The terminal device may perform reporting by using indication information, or may perform reporting in another manner. This is not limited herein.

For example, when the first data packet is the last data determined by the terminal device based on the first computing power instance, the terminal device may report the first data to the network device.

For another example, when the first data packet is the last data packet determined by the terminal device based on the first computing power instance, the terminal device may report the first data packet to the network device.

703: The network device processes the first data packet based on a second computing power instance corresponding to the first computing power instance.

After receiving the first data packet from the terminal device, the network device may determine the first computing power instance based on the information about the first computing power instance included in the first data packet, and then may determine the second computing power instance based on the first computing power instance, that is, may determine the second computing power instance corresponding to the first computing power instance.

The network device has a correspondence between different computing power instances. The correspondence between the computing power instances may be shown in Table 6.

**Table 6**

| Information about a computing power instance | Information about a computing power instance |
|---|---|
| Computing power instance 1 | Computing power instance 2 |
| Computing power instance 3 | Computing power instance 5 |
| Computing power instance 4 | Computing power instance 7 |
| ... | ... |

It should be understood that Table 6 is an example description of the correspondence between the computing power instances, and constitutes no limitation on the correspondence.

The network device may determine, based on the correspondence between the computing power instances, the second computing power instance corresponding to the first computing power instance. Then, the network device may process the first data packet based on the second computing power instance.

The network device may process the first data packet in an executor corresponding to the second computing power instance by using the second computing power instance.

Optionally, the communication method may further include the following steps.

704: The network device determines a second data packet based on the second computing power instance.

705: The network device sends, to the terminal device, the second data packet that includes the information about the first computing power instance.

706: The terminal device processes the second data packet based on the first computing power instance.

When the network device has data to be sent to the terminal device, the network device may determine the second data packet based on the second computing power instance. The second computing power instance is a computing power instance currently being used by the network device, that is, a computing power instance currently in an active state in the network device, that is, a computing power instance currently being executed in the network device.

The network device may first process fourth data by using the second computing power instance, to obtain fifth data, and then may determine the second data packet based on the fifth data. The fourth data is any data in the data to be sent by the network device to the terminal device. The second data packet is any one of data packets determined by the network device based on the fifth data.

The network device may send the second data packet to the terminal device. Correspondingly, the terminal device may receive the second data packet from the network device.

In a case, the second data packet may include the information about the first computing power instance. When there is no correspondence between computing power instances in the terminal device, because there is no correspondence between the computing power instances in the terminal device, if the network device sends information about the second computing power instance to the terminal device, the terminal device cannot determine, based on the information about the second computing power instance, the first computing power instance corresponding to the second computing power instance. Therefore, the network device may determine, based on the second computing power instance and the correspondence between the computing power instances, the first computing power instance corresponding to the second computing power instance, and the second data packet may directly include the information about the first computing power instance, so that after receiving the second data packet, the terminal device may determine the first computing power instance based on the information about the first computing power instance, and then process the second data packet based on the first computing power instance.

The second data packet may include or carry the information about the first computing power instance in one or more of the following three cases.

In a case, the second data packet may be carried in an LCH or a CRB corresponding to the first computing power instance. For detailed descriptions, refer to the related descriptions in step 702.

The terminal device may determine the first computing power instance based on the LCH or the CRB that carries the second data packet.

In another case, the information about the first computing power instance may include an identifier of the first computing power instance. For detailed descriptions, refer to the related descriptions in step 702.

The terminal device may determine the first computing power instance based on the identifier of the first computing power instance included in the second data packet.

In still another case, the information about the first computing power instance may include an SN and a status indication that are of the second data packet. The status indication indicates whether the second data packet is a last data packet that needs to be processed by using the first computing power instance.

The terminal device may determine, based on the SN and the status indication that are of the second data packet, whether the second data packet is the last data packet that needs to be processed by using the first computing power instance. When the terminal device switches from the first computing power instance to the third computing power instance, if the status indication indicates that the second data packet is the last data packet that needs to be processed by using the first computing power instance, the status indication is "1". Therefore, the terminal device may determine, based on the value "1" of the status indication, that the second data packet is the last data packet that needs to be processed by using the first computing power instance. In addition, the terminal device may further determine that a data packet whose SN is after the SN of the second data packet is a data packet that needs to be processed by using the third computing power instance.

For example, it is assumed that SNs of data packets are sorted in descending order, the SN of the second data packet is 20, and the status indication is "1". Before next switching, a data packet whose SN is less than 20 is a data packet that needs to be processed by using the third computing power instance.

In another case, the second data packet may include the information about the second computing power instance. When there is a correspondence between computing power instances in the terminal device, because there is the correspondence between the computing power instances in the terminal device, the terminal device may determine, based on the information about the second computing power instance, the first computing power instance corresponding to the second computing power instance. Therefore, the second data packet may directly include the information about the second computing power instance, so that after receiving the second data packet, the terminal device may determine the second computing power instance based on the information about the second computing power instance, may determine the first computing power instance corresponding to the second computing power instance, and may further process the second data packet based on the first computing power instance.

The information about the second computing power instance included in the second data packet is similar to the information about the first computing power instance included in the first data packet in step 702. For detailed descriptions, refer to step 702.

In addition, the network device may alternatively indicate, in another case, the first computing power instance by which the terminal device needs to process the second data packet.

In a case, the network device may send seventh indication information to the network device. The seventh indication information indicates last data that needs to be processed by using the first computing power instance. The second data packet may include information about fourth data.

For example, when the fourth data is last data processed by the network device based on the second computing power instance, the network device may send the seventh indication information to the terminal device. The seventh indication information indicates the fourth data. The seventh indication information may include an identifier of the fourth data, may include a service identifier of the fourth data, or may include other information that may uniquely identify the first data.

The seventh indication information may be sent to the terminal device together with a data packet determined based on sixth data. The sixth data is last data processed by the network device by using the second computing power instance.

Alternatively, the seventh indication information and a data packet determined based on sixth data may be separately sent to the network device. The seventh indication information and the data packet determined based on the sixth data may be sent by using one piece of control information. For example, the seventh indication information and the data packet determined based on the sixth data may be sent by using downlink control information (downlink control information, DCI).

The foregoing descriptions are merely example descriptions of the seventh indication information, and do not limit a specific meaning of the seventh indication information, provided that the seventh indication can indicate that the terminal device does not use the first computing power instance subsequently, and the terminal device may determine, based on the seventh indication information, the data packet that needs to be processed by the terminal device by using the first computing power instance.

The seventh indication information may alternatively indicate a last data packet that needs to be processed by using the first computing power instances. For example, the seventh indication information may include an identifier of the last data packet that needs to be processed by the terminal device based on the first computing power instance.

It should be understood that, for related descriptions of same information or corresponding information in different steps or different locations in the foregoing communication method, reference may be made to each other.

It should be understood that a function performed by the terminal device in the foregoing communication method may also be performed by the module (for example, a chip) in the terminal device, and a function performed by the network device in the foregoing communication method may also be performed by the module (for example, a chip) in the network device.

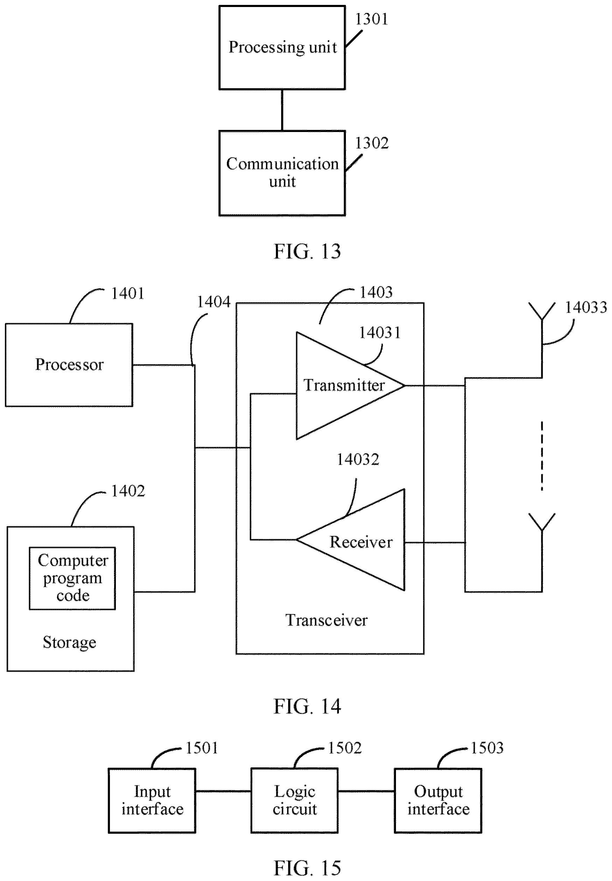

Based on the foregoing network architecture, FIG. 13 is a diagram of a structure of a communication apparatus according to an embodiment of this application. As shown in FIG. 13, the communication apparatus may include a processing unit 1301 and a communication unit 1302.

In a case, the communication apparatus may be a terminal device or may be a module (for example, a chip) in the terminal device.

The processing unit 1301 is configured to determine a first data packet based on a first computing power instance.

The communication unit 1302 is configured to send the first data packet to a network device. The first data packet includes information about the first computing power instance.

In a possible implementation, the communication unit 1302 is further configured to receive first configuration information from the network device. The first configuration information includes N computing power instances and N LCHs or N CRBs, the N computing power instances are in one-to-one correspondence with the N LCHs or the N CRBs, N is an integer greater than or equal to 2, and the N computing power instances include the first computing power instance.

In a possible implementation, that the first data packet includes information about the first computing power instance includes:

The first data packet is carried in an LCH or a CRB corresponding to the first computing power instance.

In a possible implementation, the information about the first computing power instance includes an identifier of the first computing power instance.

In a possible implementation, the information about the first computing power instance includes an SN and a status indication that are of the first data packet. The status indication indicates whether the first data packet is a last data packet determined based on the first computing power instance.

In a possible implementation, the communication unit 1302 is further configured to receive first indication information from the network device. The first indication information indicates the first computing power instance.

In a possible implementation, the processing unit 1301 is specifically configured to determine the first data packet in an executor corresponding to the first computing power instance based on the first computing power instance.

In a possible implementation, the communication unit 1302 is further configured to receive a second data packet from the network device. The second data packet is determined by the network device based on a second computing power instance, the second data packet includes the information about the first computing power instance, and the second computing power instance is a computing power instance corresponding to the first computing power instance.

The processing unit 1301 is further configured to process the second data packet based on the first computing power instance.

For more detailed descriptions of the processing unit 1301 and the communication unit 1302, directly refer to the related descriptions of the terminal device in the method embodiment shown in FIG. 7. Details are not described herein.

In another case, the communication apparatus may be a network device or may be a module (for example, a chip) in the network device.

The communication unit 1302 is configured to receive a first data packet from a terminal device. The first data packet includes information about a first computing power instance.

The processing unit 1301 is configured to process the first data packet based on a second computing power instance. The second computing power instance is a computing power instance corresponding to the first computing power instance.

In a possible implementation, the communication unit 1302 is further configured to send first configuration information to the terminal device. The first configuration information includes N computing power instances and N LCHs or N CRBs, the N computing power instances are in one-to-one correspondence with the N LCHs or the N CRBs, N is an integer greater than or equal to 2, and the N computing power instances include the first computing power instance.

In a possible implementation, that the first data packet includes information about a first computing power instance includes:

The first data packet is carried in an LCH or a CRB corresponding to the first computing power instance.

In a possible implementation, the information about the first computing power instance includes an identifier of the first computing power instance.

In a possible implementation, the information about the first computing power instance includes a sequence number SN and a status indication that are of the first data packet. The status indication indicates whether the first data packet is a last data packet determined based on the first computing power instance.

In a possible implementation, the communication unit 1302 is further configured to send first indication information to the terminal device. The first indication information indicates the first computing power instance.

In a possible implementation, the processing unit 1301 is specifically configured to process the first data packet in an executor corresponding to the second computing power instance by using the second computing power instance.

In a possible implementation, the processing unit 1301 is further configured to determine a second data packet based on the second computing power instance.

The communication unit 1302 is further configured to send the second data packet to the terminal device. The second data packet includes the information about the first computing power instance.

For more detailed descriptions of the processing unit 1301 and the communication unit 1302, directly refer to the related descriptions of the network device in the method embodiment shown in FIG. 7. Details are not described herein.

Based on the foregoing network architecture, FIG. 14 is a diagram of a structure of another communication apparatus according to an embodiment of this application. As shown in FIG. 14, the communication apparatus may include a processor 1401, an optional storage 1402, a transceiver 1403, and a bus 1404. The storage 1402 may exist independently, and may be connected to the processor 1401 through the bus 1404. Alternatively, the storage 1402 may be integrated with the processor 1401. The bus 1404 is configured to implement connections between these components. In a case, as shown in FIG. 14, the transceiver 1403 may include a transmitter 14031, a receiver 14032, and an antenna 14033. In another case, the transceiver 1403 may include a transmitter (namely, an output interface) and a receiver (namely, an input interface). The transmitter may include a transmitter machine and an antenna, and the receiver may include a receiver machine and an antenna.

In a case, the communication apparatus may be a terminal device or may be a module in the terminal device. In another case, the communication apparatus may be a network device or may be a module in the network device. When a computer program stored in the storage 1402 is executed, the processor 1401 is configured to control the communication unit 1302 to perform the operations performed in the foregoing embodiments. The processor 1401 is further configured to perform the operations performed by the processing unit 1301 in the foregoing embodiments. The transceiver 1403 is configured to perform the operations performed by the communication unit 1302 in the foregoing embodiments. The communication apparatus may alternatively be configured to perform various methods performed by the terminal device or the network device in the method embodiment in FIG. 7. Details are not described again.

Based on the foregoing network architecture, FIG. 15 is a diagram of a structure of still another communication apparatus according to an embodiment of this application. As shown in FIG. 15, the communication apparatus may include an input interface 1501, a logic circuit 1502, and an output interface 1503. The input interface 1501 is connected to the output interface 1503 by using a logic circuit 1502. The input interface 1501 is configured to receive information from another communication apparatus, and the output interface 1503 is configured to output, schedule, or send information to the another communication apparatus. The logic circuit 1502 is configured to perform an operation other than operations of the input interface 1501 and the output interface 1503, for example, implement a function implemented by the processor 1401 in the foregoing embodiment. The communication apparatus may be a terminal device (or a module in the terminal device, for example, a chip), or may be an access network device (or a module in the access network device, for example, a chip). For more detailed descriptions of the input interface 1501, the logic circuit 1502, and the output interface 1503, directly refer to the related descriptions of the terminal device or the network device in the foregoing method embodiment. Details are not described herein.

It should be understood that the foregoing modules may be independent of each other, or may be integrated. For example, a transmitter, a receiver, and an antenna may be independent of each other, or may be integrated into a transceiver. For another example, the input interface and the output interface may be independent of each other, or may be integrated into a communication interface.

An embodiment of this application further discloses a computer-readable storage medium. The computer-readable storage medium stores a computer program or computer instructions. When the computer program or the computer instructions are run on a computer, the methods in the foregoing method embodiments are performed.

An embodiment of this application further discloses a computer program product including a computer program or computer instructions. When the computer program or the computer instructions are run on a computer, the methods in the foregoing method embodiments are performed.

An embodiment of this application further discloses a communication system. The communication system may include a network device and a terminal device. For specific descriptions, refer to the foregoing communication method.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
determining a first data packet based on a first computing power instance; and
sending the first data packet to a network device, wherein the first data packet comprises information about the first computing power instance.

2. The method according to claim 1, wherein the method further comprises:
receiving first configuration information from the network device, wherein the first configuration information comprises N computing power instances and N logical channels LCHs or N computing radio bearers CRBs, the N computing power instances are in one-to-one correspondence with the N LCHs or the N CRBs, N is an integer greater than or equal to 2, and the N computing power instances comprise the first computing power instance.

3. The method according to claim 1 or 2, wherein that the first data packet comprises information about the first computing power instance comprises:
the first data packet is carried in an LCH or a CRB corresponding to the first computing power instance.

4. The method according to any one of claims 1 to 3, wherein the information about the first computing power instance comprises an identifier of the first computing power instance.

5. The method according to any one of claims 1 to 4, wherein the information about the first computing power instance comprises a sequence number SN and a status indication that are of the first data packet, and the status indication indicates whether the first data packet is the last data packet determined based on the first computing power instance.

6. The method according to any one of claims 1 to 5, wherein the method further comprises:
receiving first indication information from the network device, wherein the first indication information indicates the first computing power instance.

7. The method according to any one of claims 1 to 6, wherein the determining a first data based on a first computing power instance comprises:
determining the first data packet in an executor corresponding to the first computing power instance based on the first computing power instance.

8. The method according to any one of claims 1 to 7, wherein the method further comprises:
receiving a second data packet from the network device, wherein the second data packet is determined by the network device based on a second computing power instance, the second data packet comprises the information about the first computing power instance, and the second computing power instance is a computing power instance corresponding to the first computing power instance; and
processing the second data packet based on the first computing power instance.

9. A communication method, comprising:
receiving a first data packet from a terminal device, wherein the first data packet comprises information about a first computing power instance; and
processing the first data packet based on a second computing power instance, wherein the second computing power instance is a computing power instance corresponding to the first computing power instance.

10. The method according to claim 9, wherein the method further comprises:
sending first configuration information to the terminal device, wherein the first configuration information comprises N computing power instances and N logical channels LCHs or N computing radio bearers CRBs, the N computing power instances are in one-to-one correspondence with the N LCHs or the N CRBs, N is an integer greater than or equal to 2, and the N computing power instances comprise the first computing power instance.

11. The method according to claim 8 or 9, wherein that the first data packet comprises information about a first computing power instance comprises:
the first data packet is carried in an LCH or a CRB corresponding to the first computing power instance.

12. The method according to any one of claims 9 to 11, wherein the information about the first computing power instance comprises an identifier of the first computing power instance.

13. The method according to any one of claims 9 to 12, wherein the information about the first computing power instance comprises a sequence number SN and a status indication that are of the first data packet, and the status indication indicates whether the first data packet is a last data packet determined based on the first computing power instance.

14. The method according to any one of claims 9 to 13, wherein the method further comprises:
sending first indication information to the terminal device, wherein the first indication information indicates the first computing power instance.

15. The method according to any one of claims 9 to 14, wherein the processing the first data packet based on a second computing power instance comprises:
processing the first data packet in an executor corresponding to the second computing power instance by using the second computing power instance.

16. The method according to any one of claims 9 to 15, wherein the method further comprises:
determining a second data packet based on the second computing power instance; and
sending the second data packet to the terminal device, wherein the second data packet comprises the information about the first computing power instance.

17. A communication apparatus, comprising:
a processing unit, configured to determine a first data packet based on a first computing power instance; and
a communication unit, configured to send the first data packet to a network device, wherein the first data packet comprises information about the first computing power instance.

18. The apparatus according to claim 17, wherein the communication unit is further configured to receive first configuration information from the network device, wherein the first configuration information comprises N computing power instances and N logical channels LCHs or N computing radio bearers CRBs, the N computing power instances are in one-to-one correspondence with the N LCHs or the N CRBs, N is an integer greater than or equal to 2, and the N computing power instances comprise the first computing power instance.

19. The apparatus according to claim 17 or 18, wherein that the first data packet comprises information about the first computing power instance comprises:
the first data packet is carried in an LCH or a CRB corresponding to the first computing power instance.

20. The apparatus according to any one of claims 17 to 19, wherein the information about the first computing power instance comprises an identifier of the first computing power instance.

21. The apparatus according to any one of claims 17 to 20, wherein the information about the first computing power instance comprises a sequence number SN and a status indication that are of the first data packet, and the status indication indicates whether the first data packet is a last data packet determined based on the first computing power instance.

22. The apparatus according to any one of claims 17 to 21, wherein the communication unit is further configured to receive first indication information from the network device, wherein the first indication information indicates the first computing power instance.

23. The apparatus according to any one of claims 17 to 22, wherein the processing unit is specifically configured to determine the first data packet in an executor corresponding to the first computing power instance based on the first computing power instance.

24. The apparatus according to any one of claims 17 to 23, wherein the communication unit is further configured to receive a second data packet from the network device, wherein the second data packet is determined by the network device based on a second computing power instance, the second data packet comprises the information about the first computing power instance, and the second computing power instance is a computing power instance corresponding to the first computing power instance; and
the processing unit is further configured to process the second data packet based on the first computing power instance.

25. A communication apparatus, comprising:
a communication unit, configured to receive a first data packet from a terminal device, wherein the first data packet comprises information about a first computing power instance; and
a processing unit, configured to process the first data packet based on a second computing power instance, wherein the second computing power instance is a computing power instance corresponding to the first computing power instance.

26. The apparatus according to claim 25, wherein the communication unit is further configured to send first configuration information to the terminal device, wherein the first configuration information comprises N computing power instances and N logical channels LCHs or N computing radio bearers CRBs, the N computing power instances are in one-to-one correspondence with the N LCHs or the N CRBs, N is an integer greater than or equal to 2, and the N computing power instances comprise the first computing power instance.

27. The apparatus according to claim 25 or 26, wherein that the first data packet comprises information about a first computing power instance comprises:
the first data packet is carried in an LCH or a CRB corresponding to the first computing power instance.

28. The apparatus according to any one of claims 25 to 27, wherein the information about the first computing power instance comprises an identifier of the first computing power instance.

29. The apparatus according to any one of claims 25 to 28, wherein the information about the first computing power instance comprises a sequence number SN and a status indication that are of the first data packet, and the status indication indicates whether the first data packet is a last data packet determined based on the first computing power instance.

30. The apparatus according to any one of claims 25 to 29, wherein the communication unit is further configured to send first indication information to the terminal device, wherein the first indication information indicates the first computing power instance.

31. The apparatus according to any one of claims 25 to 30, wherein the processing unit is specifically configured to process the first data packet in an executor corresponding to the second computing power instance by using the second computing power instance.

32. The apparatus according to any one of claims 25 to 31, wherein the processing unit is further configured to determine a second data packet based on the second computing power instance; and
the communication unit is further configured to send the second data packet to the terminal device, wherein the second data packet comprises the information about the first computing power instance.

33. A communication apparatus, comprising a processor and a storage, wherein the processor is coupled to the storage, and the processor invokes a computer program stored in the storage, to implement the method according to any one of claims 1 to 8.

34. A communication apparatus, comprising a processor and a storage, wherein the processor is coupled to the storage, and the processor invokes a computer program stored in the storage, to implement the method according to any one of claims 9 to 16.

35. A communication system, comprising:
the apparatus according to claim 33 and the apparatus according to claim 34.

36. A computer-readable storage medium, wherein the computer-readable storage medium stores a computer program or computer instructions, and when the computer program or the computer instructions are run, the method according to any one of claims 1 to 16 is implemented.

37. A computer program product, wherein the computer program product comprises computer program code, and when the computer program code is run, the method according to any one of claims 1 to 16 is implemented.

38. A chip, comprising a processor, configured to execute a program stored in a storage, wherein when the program is executed, the chip is enabled to perform the method according to any one of claims 1 to 16.
